(19) Europäisches Patentamt
European Patent Office
Office européen des brevets

(11) **EP 4 586 291 A1**

(12) **EUROPEAN PATENT APPLICATION**
published in accordance with Art. 153(4) EPC

(43) Date of publication:
**16.07.2025 Bulletin 2025/29**

(51) International Patent Classification (IPC):
*H01G 11/26* [(2013.01)]    *H01G 11/06* [(2013.01)]
*H01G 11/64* [(2013.01)]

(21) Application number: 23863249.1

(22) Date of filing: 07.09.2023

(52) Cooperative Patent Classification (CPC):
**H01G 11/06; H01G 11/26; H01G 11/64;** Y02E 60/10

(86) International application number:
**PCT/JP2023/032703**

(87) International publication number:
**WO 2024/053711 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 08.09.2022 JP 2022143057

(71) Applicants:
• **Asahi Kasei Kabushiki Kaisha**
Tokyo 1000006 (JP)
• **Komatsu Ltd.**
**Minato-ku**
**Tokyo 107-8414 (JP)**

(72) Inventors:
• **NAKAMURA, Fumiya**
**Tokyo 100-0006 (JP)**
• **KIMURA, Yuima**
**Tokyo 100-0006 (JP)**
• **NOTO, Kenichi**
**Tokyo 107-8414 (JP)**
• **KASAMA, Ryota**
**Tokyo 107-8414 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **NONAQUEOUS LITHIUM ELECTRICITY STORAGE ELEMENT**

(57)    The present disclosure provides a nonaqueous lithium electricity storage element having high high-temperature cycle durability. The nonaqueous lithium electricity storage element comprises a positive electrode including a positive-electrode active material layer, a negative electrode, a separator, and a nonaqueous electrolytic solution containing lithium ions. The positive-electrode active material layer comprises a positive-electrode active material and an alkali-metal compound. The negative electrode includes a negative-electrode active material layer, the surface of which, when photographed in the state of being not exposed to the air with a scanning electron microscope at a magnification of 100 diameters, gives a secondary-electron image. Binarizing the pixels of the secondary-electron image by lightness gives an image in which a light region and a plurality of dark regions corresponding to deposits formed on the surface of the negative-electrode active material layer are present. When one pixel is taken as 1.46 $\mu$m, the areas of the individual dark regions have a maximum value S [pixel$^2$] of 4,000 or less.

Fig. 2

EP 4 586 291 A1

**Description**

Technical Field

The present disclosure relates to a nonaqueous lithium power storage element. This application claims priority based on Japanese Patent Application No. 2022-143057 filed on September 8, 2022, the disclosure of which is incorporated by reference herein.

Background Art

In recent years, from the viewpoints of effective utilization of energy for more environmental conservation and reduced usage of resources, significant attention has been given to power smoothing systems for wind energy generation, overnight charging electric power storage systems, household dispersive power storage systems based on solar power generation technology, and power storage systems for electric vehicles. The first requirement for batteries used in such power storage systems is high energy density. The development of lithium-ion batteries is advancing at a rapid pace as an effective strategy for batteries with a high energy density that can meet this requirement. The second requirement is a high output characteristic. A high-power discharge characteristic is required for a power storage system during acceleration in, for example, a combination of a high-efficiency engine and a power storage system (for example, a hybrid electric vehicle), or a combination of a fuel cell and a power storage system (for example, a fuel cell electric vehicle). Electrical double layer capacitors, nickel metal hydride batteries, and the like are currently under development as high-output power storage devices.

Electrical double layer capacitors that employ activated carbon in the electrodes have output characteristics of about 0.5 to 1 kW/L. Such electrical double layer capacitors not only have high output characteristics but also have high durability (cycle characteristics and high-temperature storage characteristics) and have been considered to be optimal devices in fields where the high output mentioned above is required. However, their energy densities are about 1 to 5 Wh/L or less. A need therefore exists for even higher energy density. On the other hand, nickel metal hydride batteries employed commonly in existing hybrid electric vehicles exhibit high output equivalent to electrical double layer capacitors, and have energy densities of about 160 Wh/L. Still, research is being actively pursued toward further increasing the energy density and output characteristic and increasing the durability because of having a problem in durability (particularly, stability at high-temperature).

Research is also advancing toward increased outputs for lithium-ion batteries as well. For example, lithium-ion batteries are being developed that yield high output exceeding 3 kW/L at 50% depth of discharge (that is, a ratio of the discharged amount to the discharged capacity (%) of a power storage element). However, the energy density is 100 Wh/L or lower, and the design deliberately reduces the high energy density, which is a key feature of a lithium-ion battery. The durability (especially cycle characteristic and high-temperature storage characteristic) is inferior to that of an electrical double layer capacitor. In order to provide practical durability, therefore, these are used with a depth of discharge in a narrower range than 0 to 100%. Because the usable capacity is even lower, research is actively being pursued toward further increasing the durability of lithium-ion batteries.

Power storage elements called lithium-ion capacitors have attracted attention as promising candidates for energy storage devices that can achieve both high energy density and high output characteristics, and are being actively developed. A lithium ion capacitor is a type of power storage element by using a nonaqueous electrolytic solution comprising a lithium salt (hereinafter also referred to as "nonaqueous lithium power storage element"), wherein charge/discharge is accomplished by: non-Faraday reaction by adsorption/desorption of anions similar to an electrical double layer capacitor at about 3 V or higher, at the positive electrode; and Faraday reaction by occlusion/release of lithium ions similar to a lithium ion battery, at the negative electrode.

Lithium-ion capacitors are characterized by using activated carbon (energy density: 1 time) for the positive electrode and a carbon material (energy density: 10 times) for the negative electrode, and carrying out non-Faraday reaction at the positive electrode and carrying out charge/discharge by Faraday reaction at the negative electrodes, and are therefore asymmetric capacitors that combine the characteristics of both electrical double layer capacitors and lithium-ion secondary batteries. Lithium-ion capacitors have high output and durability, while also having high energy density (positive electrode: 1 time $\times$ negative electrode: 10 times = 100), and are characterized by the fact that there is no need to limit the depth of discharge as with lithium-ion secondary batteries.

Various studies have been made to further improve the durability of the lithium-ion capacitor (see PTL 1 to PTL 3 below). For example, PTL 1 describes a positive electrode for a nonaqueous electrolyte secondary battery in which, in at least one electron microscope image of a cross section of the positive electrode for a nonaqueous electrolyte secondary battery taken with an electron microscope in which the binder is not visible, the cross section of a connecting portion includes a large porosity region and a small porosity region that is arranged along the surface of the positive electrode active material body and has a porosity less than that of the large porosity region.

PTL 2 describes a nonaqueous lithium power storage element in which all of the pixels in the bright field regions in a binarized SEM image taken of the negative electrode active material layer surface, where a set of the maximum inscribed circles encompassing each of the pixels is represented as a frequency distribution for each size, the area ratio Z1 which is the ratio of the total area of maximum inscribed circles with sizes of less than 100 nm accounts for an area ratio of 3.5% or more and 25.5% or less of the total area of the maximum inscribed circles.

PTL 3 describes a negative electrode for a nonaqueous electrolyte secondary battery in which 15 surface SEM images obtained from different positions on the negative electrode surface are arbitrarily selected, each image is divided into a particle region and an interparticle void region, and each image is binarized to obtain processed images, from which the standard deviation of the fractal dimension of the interparticle void region calculated by a box-counting method is 0.1 or less.

In the present disclosure, a mesopore volume is calculated by a BJH method and a micropore volume is calculated by a MP method, respectively. The BJH method is advocated in NPL 1, and the MP method refers to a method of calculating a micropore volume, micropore area, and distribution of micropores by utilizing a "t-plot method" (NPL 2), which is mentioned in NPL 3.

Citation List

Patent Literature

PTL 1: WO 2019/244282 A
PTL 2: WO 2021/066174 A
PTL 3: JP 2021-158088 A

Non Patent Literature

NPL 1: E. P. Barrett, L. G. Joyner and P. Halenda, "The Determination of Pore Volume and Area Distributions in Porous Substances", J. Am. Chem. Soc., (1951), 73, pp.373-380
NPL 2: B. C. Lippens, and J. H. de Boer, "Studies on pore Systems in Catalysis V. The t Method", J. Catalysis, (1965), 4, pp.319-323
NPL 3: R. S. Mikhail, S. Brunauer, and E. E. Bodor, "Investigations of a Complete Pore Structure Analysis", J. Colloid Interface Sci., (1968), 26, pp.45-53

Summary of Invention

Technical Problem

One of the objectives of the present disclosure is to provide a nonaqueous lithium power storage element with high durability under high-temperature cycling.

Solution to Problem

Examples of the embodiments of the present disclosure are listed in the following items [1] to [10].

[1] A nonaqueous lithium power storage element comprising a positive electrode having a positive electrode active material layer which contains a positive electrode active material and an alkali metal compound, a negative electrode, a separator, and a nonaqueous electrolytic solution containing lithium ions,
wherein the negative electrode has a bright field region and a plurality of dark field regions corresponding to deposits formed on a surface of the negative electrode active material layer in an image obtained by binarizing a secondary electron image of the surface of the negative electrode active material layer based on brightness of each pixel, the image being taken at a magnification of 100 times using a scanning electron microscope without exposing to air, and
wherein a maximum value S [$pixel^2$] of an area occupied by each of the dark field regions when one pixel is 1.46 $\mu$m is 4,000 or less.
[2] The nonaqueous lithium power storage element according to item 1, wherein the positive electrode active material is activated carbon, the alkali metal compound is lithium carbonate, the nonaqueous electrolytic solution contains an electrolyte salt containing lithium ions, and a cyclic compound selected from a cyclic carbonate and a cyclic sulfate ester.

[3] The nonaqueous lithium power storage element according to item 1 or 2, wherein the maximum value S of the area of the dark field regions is 3,500 [$pixel^2$] or less.

[4] The nonaqueous lithium power storage element according to any one of items 1 to 3, wherein the maximum value S of the area of the dark field region is 2,408 [$pixel^2$] or more and 3,000 [$pixel^2$] or less.

[5] The nonaqueous lithium power storage element according to item 4, wherein the nonaqueous electrolytic solution contains the cyclic sulfate ester, and the cyclic sulfate ester is ethylene sulfate.

[6] The nonaqueous lithium power storage element according to any one of items 1 to 5, wherein the deposits corresponding to the dark field regions in the binarized image of the surface of the negative electrode active material contain a compound derived from metallic Li.

[7] The nonaqueous lithium power storage element according to any one of items 1 to 6, wherein a doping amount of lithium ions in the negative electrode is 85% or more and 100% or less.

[8] The nonaqueous lithium power storage element according to any one of items 1 to 7, wherein a mean value T [$pixel^2$] of the area occupied by each of the dark field regions when one pixel is 1.46 $\mu$m is 600 or less in the binarized image.

[9] The nonaqueous lithium power storage element according to item 8, wherein the mean value T is 400 or less.

[10] A method for producing a nonaqueous lithium power storage element, the method comprising:

a first doping step of charging the nonaqueous lithium power storage element at 0.05 C to 0.20 C until reaching 4.1 to 4.3 V, the nonaqueous lithium power storage element comprising a positive electrode precursor having a positive electrode active material layer which contains a positive electrode active material containing activated carbon, and lithium carbonate, a negative electrode, a separator, and a nonaqueous electrolytic solution, the nonaqueous electrolytic solution containing an electrolyte salt containing lithium ions, and a cyclic compound selected from a cyclic carbonate and a cyclic sulfate ester, and
a second doping step of subsequently charging the nonaqueous lithium power storage element at 0.25 C to 1.0 C until reaching 4.4 to 4.6 V.

Advantageous Effects of Invention

According to the present disclosure, there is provided a nonaqueous lithium power storage element with high durability under high-temperature cycling.

Brief Description of Drawings

FIG. 1 is a secondary electron image (SEM image) of the surface of a negative electrode active material layer of Example 1 taken at a magnification of 100 times using a scanning electron microscope without exposing to air.
FIG. 2 is an image obtained by binarizing the secondary electron image in FIG. 1 with the brightness of each pixel.
FIG. 3 is a secondary electron image (SEM image) of the surface of a negative electrode active material layer of Comparative Example 1 taken at a magnification of 100 times using a scanning electron microscope without exposing to air.
FIG. 4 is an image obtained by binarizing the secondary electron image in FIG. 3 with the brightness of each pixel.

Description of Embodiments

Hereinafter, the embodiments of the present disclosure will be described in detail, but the present disclosure is not limited to the following embodiments. The upper and lower limit values in each numerical range in the following embodiments can be arbitrarily combined to form any numerical range.

<<Nonaqueous Lithium Power Storage Element>>

The nonaqueous lithium power storage element generally comprises a positive electrode, a negative electrode, a separator and an electrolytic solution as main constituents. A solution prepared by dissolving alkali metal ions in an organic solvent (hereinafter also referred to as "nonaqueous electrolytic solution") is used as an electrolytic solution.

<Positive Electrode and Positive Electrode Precursor>

The positive electrode and the positive electrode precursor in the present disclosure comprise a positive electrode current collector and, more specifically, a positive electrode active material layer containing a positive electrode active material disposed on one or both sides of the positive electrode current collector. The positive electrode active material preferably contains a carbon material, preferably activated carbon, and may optionally contain an alkali metal compound. As mentioned below, in the present disclosure, the negative electrode is preferably pre-doped with alkali metal ions in an assembly step of the power storage element. The pre-doping method is preferably application of a voltage between the positive electrode precursor and negative electrode, after the power storage element has been assembled by using the positive electrode precursor containing an alkali metal compound, the negative electrode, the separator, the casing, and the nonaqueous electrolytic solution. The alkali metal compound may be contained in the positive electrode precursor in any aspect. For example, the alkali metal compound may be present between the positive electrode current collector and the positive electrode active material layer, or may be present on the surface of the positive electrode active material layer. The alkali metal compound is preferably contained in the positive electrode active material layer formed on the positive electrode current collector of the positive electrode precursor. Herein, the positive electrode before an alkali metal doping step is defined as "positive electrode precursor", and the positive electrode after the alkali metal doping step is defined as "positive electrode".

[Positive Electrode Active Material Layer]

The positive electrode active material layer contains a positive electrode active material and an alkali metal compound. The positive electrode active material layer may contain, in addition to the above, optional components mentioned below, as necessary.

[Positive Electrode Active Material]

The positive electrode active material preferably contains activated carbon. The positive electrode active material may further contain, in addition to activated carbon, carbon nanotubes, graphene, a conductive polymer, a lithium transition metal oxide and the like. It is possible to use, as the lithium transition metal oxide, any known material used in lithium-ion batteries.

When activated carbon is used as the positive electrode active material, there is no particular limitation on a type of activated carbon or a starting material thereof. However, it is preferable that the pores of the activated carbon are optimally controlled to achieve both high input/output characteristics and high energy density. Specifically, when V1 (cc/g) is the mesopore volume due to pores with a size of 20angstrom or more and 500angstrom or less as calculated by the BJH method, and $V_2$ (cc/g) is the micropore volume due to pores with sizes of less than 20angstrom as calculated by the MP method, then: (1) in order to obtain high input/output characteristics, activated carbon satisfying $0.3 < V_1 \leq 0.8$ and $0.5 \leq V_2 \leq 1.0$ and exhibiting a specific surface area of 1,500 $m^2/g$ or more and 3,000 $m^2/g$ or less as measured by the BET method (hereinafter also referred to as "activated carbon 1") is preferred, and (2) in order to obtain high energy density, activated carbon satisfying $0.8 < V_1 \leq 2.5$ and $0.8 < V_2 \leq 3.0$ and exhibiting a specific surface area of 2,300 $m^2/g$ or grater and 4,000 $m^2/g$ or less as measured by the BET method (hereinafter also referred to as "activated carbon 2"), is preferred.

The BET specific surface area, mesopore volume, micropore volume and mean pore diameter of the active material in the present disclosure each are a value determined by the following respective methods. A sample is vacuum dried at 200°C for a day and a night, and the adsorption/desorption isotherm is measured by using nitrogen as the adsorbate. By using the obtained isotherm on the adsorption side, the BET specific surface area is calculated by the multipoint BET method or single point BET method, the mesopore volume is calculated by the BJH method, and the micropore volume is calculated by the MP method, respectively. The BJH method is a method of calculation commonly used for analysis of mesopores, and it was advocated by Barrett, Joyner, Halenda et al. (NPL 1). The MP method is a method in which the "t-plot method" (NPL 2) is utilized to determine micropore volume, micropore area and micropore distribution, and it is the method proposed by R. S. Mikhail, Brunauer and Bodor (NPL 3). The mean pore size refers to a value calculated by dividing the total pore volume per weight of a sample, which is obtained by measuring the equilibrium adsorption amount of nitrogen gas under each relative pressure at liquid nitrogen temperature, by the above-mentioned BET specific surface area.

(Activated Carbon 1)

The mesopore volume V1 of activated carbon 1 is preferably a value of more than 0.3 cc/g, from the viewpoint of increasing input/output characteristics when a positive electrode material is incorporated into a power storage element. The mesopore volume V1 of activated carbon 1 is also preferably 0.8 cc/g or less, from the viewpoint of minimizing reduction in the bulk density of the positive electrode. $V_1$ is more preferably 0.35 cc/g or more and 0.7 cc/g or less, and still more preferably 0.4 cc/g or more and 0.6 cc/g or less. The micropore volume $V_2$ of activated carbon 1 is preferably 0.5 cc/g or more in order to increase the specific surface area of the activated carbon and to increase a capacity. From the viewpoints of reducing the bulk of the activated carbon, increasing the density as an electrode and increasing the capacity per unit volume, and the micropore volume V2 of the activated carbon 1 is preferably 1.0 cc/g or less. V2 is more preferably 0.6 cc/g or more and 1.0 cc/g or less, and still more preferably 0.8 cc/g or more and 1.0 cc/g or less.

The ratio $(V_1/V_2)$ of the mesopore volume $V_1$ to the micropore volume $V_2$ is preferably within a range of $0.3 \leq V_1/V_2 \leq 0.9$. Namely, $V_1/V_2$ is preferably 0.3 or more from the viewpoint of increasing the ratio of the mesopore volume to the micropore volume to a degree allowing reduction in the output characteristics to be minimized while maintaining high capacity. On the other hand, from the viewpoint of increasing the proportion of the micropore volume relative to the mesopore volume, to an extent allowing reduction in capacity to be minimized while maintaining high output characteristics, the range of $V_1/V_2$ is preferably 0.9 or less, more preferably $0.4 \leq V_1/V_2 \leq 0.7$, and still more preferably $0.55 \leq V_1/V_2 \leq 0.7$.

From the viewpoint of maximizing the output of the obtained power storage element, the mean pore size of activated carbon 1 is preferably 17angstrom or more, more preferably 18angstrom or more, and still more preferably 20angstrom or more. From the viewpoint of maximizing the capacity, the mean pore size of activated carbon 1 is preferably 25angstrom or less. The BET specific surface area of activated carbon 1 is preferably 1,500 m$^2$/g or more and 3,000 m$^2$/g or less, and more preferably 1,500 m$^2$/g or more and 2,500 m$^2$/g or less. When the BET specific surface area is 1,500 m$^2$/g or more, satisfactory energy density is facilitated to be obtained, and when the BET specific surface area is 3,000 m$^2$/g or less, there will be no need to add large amounts of a binder to maintain the strength of the electrode, and therefore the performance per volume of the electrode will be higher.

The activated carbon 1 having such features can be obtained, for example, by using the starting material and treatment method described below. The carbon source to be used as the starting material for activated carbon 1 is not particularly limited. For example, plant-based starting materials such as wood, wood dust, coconut shell, by-products of pulp production, bagasse and molasses; fossil-based starting materials such as peat, lignite, brown coal, bituminous coal, anthracite, petroleum distillation residue components, petroleum pitch, coke and coal tar; various synthetic resins such as phenol resin, vinyl chloride resin, vinyl acetate resin, melamine resin, urea resin, resorcinol resin, celluloid, epoxy resin, polyurethane resin, polyester resin and polyamide resin; synthetic rubbers such as polybutylene, polybutadiene and polychloroprene; other synthetic wood or synthetic pulp materials, and carbides thereof, are included. From the viewpoint of suitability for mass-production and of cost, the starting materials preferred among these are plant-based starting materials such as coconut shell and wood dust, and carbides thereof, with coconut shell carbides being particularly preferred.

The system used for carbonization and activation to obtain the activated carbon 1 from these starting materials may be publicly known systems such as, a fixed bed system, moving bed system, fluidized bed system, slurry system or rotary kiln system. The carbonization method for these starting materials is a method in which inert gases such as nitrogen, carbon dioxide, helium, argon, xenon, neon, carbon monoxide, exhaust gas, or a mixed gas composed mainly of such inert gases with other gases, are preferably used for calcinating at about 400°C or higher and 700°C or less, and more preferably about 450°C or higher 600°C or lower, over a period of about 30 minutes or more and 10 hours or less. The activation method for a carbide obtained by the carbonization method described above is preferably a gas activation method in which activating gases such as water vapor, carbon dioxide or oxygen are used for calcination. A method using water vapor or carbon dioxide as the activating gas is preferred among these. In this activation method, while the activating gas is supplied at a rate of preferably 0.5 kg/h or more and 3.0 kg/h or less, and more preferably 0.7 kg/h or more and 2.0 kg/h or less, the temperature of the above carbide is preferably raised to 800°C or higher and 1,000°C or lower over 3 hours or more and 12 hours, more preferably 5 hours or more and 11 hours or less, and still more preferably 6 hours or more and 10 hours or less, for activation. Carbide may be subjected to a primary activation before activation treatment of the carbide as described above. In the primary activation, a method of calcinating the carbon material at a temperature of lower than 900°C by using an activating gas such as water vapor, carbon dioxide or oxygen for gas activation, is usually preferred.

By appropriate combinations of the calcination temperature and calcination time for the carbonization method described above, and of the activating gas supply rate, temperature-rising rate and maximum activation temperature in the activation method, it is possible to produce activated carbon 1 that can be used in the present disclosure.

The mean particle size of the activated carbon 1 is preferably 2 μm or more and 20 μm or less, more preferably 2 μm or more and 15 μm or less, and still more preferably 3 μm or more and 10 μm or less. When the above mean particle size is 2 μm or more, the capacity per electrode volume will tend to be higher due to the higher density of the active material layer. A small mean particle size may lead to the disadvantage of low durability, but a mean particle size of 2 μm or more will help avoid this disadvantage. A mean particle size of 20 μm or less, on the other hand, will tend to be more suitable for rapid charge/discharge.

(Activated Carbon 2)

The mesopore volume $V_1$ of activated carbon 2 is preferably a value more than 0.8 cc/g, from the viewpoint of a more output characteristic when the positive electrode material is incorporated into a power storage element, but $V_1$ is also preferably 2.5 cc/g or less from the viewpoint of minimizing reduction in the capacity of the power storage element. $V_1$ is more preferably 1.00 cc/g or more and 2.0 cc/g or less, and still more preferably 1.2 cc/g or more and 1.8 cc/g or less. The micropore volume $V_2$ of activated carbon 2 is preferably more than 0.8 cc/g for a more specific surface area of the activated carbon and an increase in the capacity, but V2 is also preferably 3.0 cc/g or less to increase the density as an activated carbon electrode, and to increase the capacity per unit volume. $V_2$ is more preferably more than 1.0 cc/g and 2.5 cc/g or less, and still more preferably 1.5 cc/g or more and 2.5 cc/g or less. Activated carbon 2 having the mesopore volume and micropore volume mentioned above has a higher BET specific surface area than activated carbon used in conventional electrical double layer capacitors or lithium-ion capacitors. The specific value of the BET specific surface area of the activated carbon 2 is preferably 2,300 $m^2$/g or more and 4,000 $m^2$/g or less, more preferably 3,000 $m^2$/g or more and 4,000 $m^2$/g or less, and still more preferably 3,200 $m^2$/g or more and 3,800 $m^2$/g or less. When the BET specific surface area is 2,300 $m^2$/g or more, a satisfactory energy density is facilitated to be obtained, and when the BET specific surface area is 4,000 $m^2$/g or less, there will be no need to add an enormous amount of a binder to maintain the strength of the electrode, and therefore the performance per volume of the electrode will be higher.

Activated carbon 2 having such features can be obtained, for example, by using the starting material and treatment method described below. The carbonaceous material used as the starting material for activated carbon 2 is not particularly limited provided that it is a carbon source commonly used as a starting material for activated carbon, and the carbon source includes plant-based starting materials such as wood, wood dust and coconut shell; fossil-based starting materials such as petroleum pitch and coke; and various synthetic resins such as phenol resins, furan resins, vinyl chloride resins, vinyl acetate resins, melamine resins, urea resins and resorcinol resins. Of these starting materials, phenol resins and furan resins are especially preferred, which are suitable for fabrication of activated carbon with a high specific surface area.

The system used for carbonization of these starting materials, or the heating method during activation treatment, may be publicly known systems such as, for example, a fixed bed system, moving bed system, fluidized bed system, slurry system and rotary kiln system. The atmosphere during heating is an inert gas such as nitrogen, carbon dioxide, helium, argon, or a mixed gas composed mainly of such inert gases in admixture with other gases. It is common to use the method of calcining at a carbonization temperature of about 400°C or higher and 700°C or lower for about 0.5 hour or more and 10 hours or less. The activation method for the carbide may be a gas activation method in which calcination is accomplished by using activating gases such as water vapor, carbon dioxide or oxygen, or an alkali metal activation method in which heat treatment is carried out after mixture with an alkali metal compound, but an alkali metal activation method is preferred for fabrication of activated carbon with a high specific surface area. In this activation method, a carbide and an alkali metal compound such as KOH or NaOH may be mixed so that the weight ratio is 1:1 (the amount of the alkali metal compound is equal to or more than the amount of the carbide). After mixing, a heat treatment is carried out at a temperature within a range of 600°C or higher and 900°C or lower for 0.5 hours or more and 5 hours or less under an inert gas atmosphere. After heating, the alkali metal compound may be cleaned and removed with an acid or water, followed by drying. In order to increase the micropore volume and not increase the mesopore volume, the amount of carbide may be increased during activation, and mixed with KOH. In order to increase both the micropore volume and mesopore volume, a large amount of KOH may be used during activation. In order to increase mainly the mesopore volume, steam-activation is preferably carried out after alkaline activation treatment.

The mean particle size of activated carbon 2 is preferably 2 $\mu$m or more and 20 $\mu$m or less, and more preferably 3 $\mu$m or more and 10 $\mu$m or less.

(Usage Form of Activated Carbon)

Activated carbons 1 and 2 may each be a single type of activated carbon, or a mixture of two or more different types of activated carbons, such that the mixture as a whole exhibit the above characteristic values. Either of activated carbon 1 or 2 may be used, or both in admixture may be used. The positive electrode active material may include materials other than activated carbons 1 and 2, for example, activated carbon without specific $V_1$ and/or $V_2$ described above, or materials other than activated carbon (for example, conductive polymer, etc.). The total content of activated carbons 1 and 2 in the positive electrode active material layer of the positive electrode precursor is preferably 40.0% by weight or more and 70.0% by weight or less, and more preferably 45.0% by weight or more and 65.0% by weight or less, based on the total weight of the positive electrode active material layer. If this value is 40.0% by weight or more, the energy density can be increased. If this value is 70.0% by weight or less, the high-temperature durability and high-voltage durability can be improved.

(Lithium Transition Metal Oxide)

The positive electrode active material can further contain a lithium transition metal compound. The capacitance of the nonaqueous lithium power storage element can be increased by including a lithium transition metal oxide. The lithium transition metal oxide includes a transition metal oxide capable of occlusion and release of lithium. There is no particular limitation on the transition metal oxide to be used as the positive electrode active material. Examples of transition metal oxides include oxides containing one or more elements selected from the group consisting of cobalt, nickel, manganese, iron, vanadium and chromium. Specific examples of the transition metal oxide include compounds represented by the following formulas:

$Li_xCoO_2$ {where x satisfies $0 \leq x \leq 1$},
$Li_xNiO_2$ {where x satisfies $0 \leq x \leq 1$},
$Li_xNi_yM_{(1-y)}O_2$ {where M is at least one element selected from the group consisting of Co, Mn, Al, Fe, Mg and Ti, x satisfies $0 \leq x \leq 1$, and y satisfies $0.05 < y < 0.97$},
$Li_xNi_{1/3}Co_{1/3}Mn_{1/3}O_2$ {where x satisfies $0 \leq x \leq 1$},
$Li_xMnO_2$ (where x satisfies $0 \leq x \leq 1$},
$\alpha\text{-}Li_xFeO_2$ {where x satisfies $0 \leq x \leq 1$},
$Li_xVO_2$ {where x satisfies $0 \leq x \leq 1$},
$Li_xCrO_2$ {where x satisfies $0 \leq x \leq 1$},
$Li_xFePO_4$ {where x satisfies $0 \leq x \leq 1$},
$Li_xMnPO_4$ {where x satisfies $0 \leq x \leq 1$},
$Li_zV_2(PO_4)_3$ {where z satisfies $0 \leq z \leq 3$},
$Li_xMn_2O_4$ {where x satisfies $0 \leq x \leq 1$},
$Li_xM_yMn_{(2-y)}O_4$ {where M is at least one element selected from the group consisting of Co, Mn, Al, Fe, Mg and Ti, x satisfies $0 \leq x \leq 1$ and y satisfies $0.05 < y < 0.97$},
$Li_xNi_aCo_bAl_{(1-a-b)}O_2$ {where x satisfies $0 \leq x \leq 1$, and a and b satisfy $0.02 < a < 0.97$ and $0.02 < b < 0.97$}, and
$Li_xNi_cCo_dMn_{(1-c-d)}O_2$ {where x satisfies $0 \leq x \leq 1$, and c and d satisfy $0.02 < c < 0.97$ and $0.02 < d < 0.97$}.

Of these, the transition metal oxide that is used as the positive electrode active material is preferably compounds represented by $Li_xNi_aCo_bAl_{(1-a-b)}O_2$, $Li_xNi_cCo_dMn_{(1-c-d)}O_2$, $Li_xCoO_2$, $Li_xMn_2O_4$, or $Li_xFePO_4$, $Li_xMnPO_4$ and $Li_zV_2(PO_4)_3$ are preferred, from the viewpoints of high capacitance, low resistance, cycle characteristics, decomposition of the alkali metal compound different from the positive electrode active material, and preventing loss of the positive electrode active material during pre-doping.

If an alkali metal compound different from the positive electrode active material is included in the positive electrode, the alkali metal compound can serve as a dopant source for the alkali metal in pre-doping to allow pre-doping of the negative electrode, so that electrochemical charge/discharge as a nonaqueous lithium power storage element can be achieved even if a lithium ion is not already included in the transition metal compound (that is, even if x = 0 or z = 0). The content of the lithium transition metal oxide in the positive electrode active material layer of the positive electrode precursor is preferably 8.0% by weight or more and 30.0% by weight or less, based on the total weight of the positive electrode active material layer. If the content of the lithium transition metal oxide in the positive electrode active material layer of the positive electrode is 8.0% by weight or more, a nonaqueous lithium power storage element with high capacitance can be obtained. A nonaqueous lithium power storage element with low resistance can be obtained if the value is 30.0% by weight or less.

[Alkali Metal Compound]

The positive electrode active material layer of the positive electrode and positive electrode precursor according to the present disclosure contains an alkali metal compound. When the positive electrode active material layer contains the alkali metal compound as a positive electrode active material, the positive electrode active material layer further contains an alkali metal compound other than the positive electrode active material. Examples of the alkali metal compound include oxides such as $M_2O$; hydroxides such as MOH; and halides such as MF and MCl; and carboxylates represented by RCOOM (where R is H or an alkyl or aryl group), with M being one more selected from among Li, Na, K, Rb and Cs, and one or more of these may be used. Specific examples of alkali metal compounds include lithium carbonate, sodium carbonate, potassium carbonate, rubidium carbonate, cesium carbonate, lithium oxide and lithium hydroxide. An alkali metal compound is suitably one or more alkali metal carbonates selected from among lithium carbonate, sodium carbonate, potassium carbonate, rubidium carbonate and cesium carbonate, more suitably lithium carbonate, sodium carbonate or potassium carbonate, and from the viewpoint of high capacity per unit weight, most suitably lithium carbonate.

The positive electrode active material layer of the positive electrode precursor may contain, in addition to the positive electrode active material, at least one type of alkali metal compound. The positive electrode and the positive electrode precursor may also contain one or more selected from among carbonates, oxides, hydroxides, halides and carboxylates of alkaline earth metals selected from the group consisting of Be, Mg, Ca, Sr and Ba

An alkali metal compound and, if any, an alkaline earth metal compound is preferably in fine particulate form. In the present disclosure, the mean particle size of the alkali metal compound that is present in the positive electrode active material layer of the positive electrode precursor is preferably 0.1 $\mu$m or more and 10 $\mu$m or less. If the mean particle size is 0.1 $\mu$m or more, its dispersibility in the positive electrode precursor will be excellent. If the mean particle size is 10 $\mu$m or less, the surface area of the alkali metal compound will increase, and decomposition reaction will proceed efficiently. The mean particle size of the alkali metal compound in the positive electrode precursor is preferably less than the mean particle size of the active carbon mentioned above. If the mean particle size of the alkali metal compound is less than the mean particle size of activated carbon, electron conduction of the positive electrode active material layer increases, which can contribute to lower resistance of the electrode body or the power storage element. The method of measuring the mean particle size of the alkali metal compound in the positive electrode precursor is not particularly limited, and calculation may be from an SEM image and SEM-EDX image of the positive electrode cross section. The method of forming the positive electrode cross section may employ BIB processing in which an Ar beam is irradiated from above the positive electrode, and a smooth cross section is created along the edges of a masking shield set directly above the sample. Various methods may be used for micronization of the alkali metal compound. For example, a pulverizer such as a ball mill, bead mill, ring mill, jet mill or rod mill may be used.

The content of the alkali metal compound in the positive electrode active material layer of the positive electrode precursor is preferably 15.0% by weight or more and 45.0% by weight or less, where 100% by weight is the total weight of the positive electrode active material. If the value is 15.0% by weight or more, it will be possible to pre-dope the alkali metal ion in a sufficient amount in the negative electrode, thereby increasing the capacity of the nonaqueous alkali metal power storage element. If the value is 45.0% by weight or less, electron conduction in the positive electrode precursor can be increased and decomposition of the alkali metal compound can efficiently take place. When the positive electrode precursor contains the aforementioned two or more alkali metal compounds or alkaline earth metal compounds in addition to an alkali metal compound, the total amount of the alkali metal compounds and alkaline earth metal compounds is preferably in the range specified above. The amount of the alkali metal compound in the positive electrode, that is, the amount of the alkali metal compound remaining after the alkali metal doping step, is preferably 15% by weight or less based on the amount of the alkali metal compound contained in the positive electrode precursor. If the amount of alkali metal compound in the positive electrode is 15% by weight or less relative to the amount of alkali metal compound in the positive electrode precursor, this indicates that 85% by weight or more of the alkali metal compound is decomposed in the alkali metal doping step and is sufficiently pre-doped. Quantitation of the alkali metal element and alkaline earth metal element may be carried out by ICP-AES, atomic absorption spectroscopy, fluorescent X-ray analysis, neutron activation analysis, ICP-MS or the like.

[Other Components of Positive Electrode Active Material Layer]

The positive electrode active material layer of the positive electrode and positive electrode precursor in the present disclosure may contain, in addition to the positive electrode active material and the alkali metal compound, optional components such as a dispersing agent, a conductive filler, binder and a pH adjuster, as necessary.

(Dispersing Agent)

The dispersing agent is not particularly limited, and any one or more selected from among carboxymethyl cellulose, polycarboxylic acids, polycarboxylic acid salts, polyvinylpyrrolidone, polyvinyl alcohol and surfactants may be used. It is particularly preferable that the dispersing agent include, for example, carboxymethyl cellulose and one or more selected from polyvinylpyrrolidone and polyvinyl alcohol. The content of the dispersion stabilizer in the positive electrode active material layer of the positive electrode precursor is preferably 1.0 part by weight or more and 7.0 parts by weight or less, relative to 100 parts by weight of the solid content in the positive electrode active material layer. When the amount of the dispersion stabilizer is 7.0 parts by weight or less, high input/output characteristic will be exhibited without inhibiting movement or diffusion of ions in and from the negative electrode active material.

(Conductive Filler)

The conductive filler is preferably made of a conductive carbonaceous material having a higher conductivity than that of the positive electrode active material. As such conductive filler, for example, one or more types selected from carbon black, graphite, graphene, and mixtures thereof are preferable. Carbon black includes, for example, Ketjen black, acetylene black and the like. The graphite includes, for example, flake graphite. As the conductive filler, carbon black is used particularly preferably.

The content of the conductive filler in the positive electrode active material layer of the positive electrode precursor is preferably 0 part by weight or more and 20 parts by weight or less, and more preferably 1 part by weight or more and 15 parts by weight or less, relative to 100 parts by weight of the positive electrode active material. From the viewpoint of high input, it is preferable to mix as much conductive filler as possible. When the mixing amount is 20 parts by weight or less, the content of the positive electrode active material in the positive electrode active material layer increases, and therefore the energy density per volume of the positive electrode active material layer is improved, which is preferable.

(Binder)

It is possible to use, as the binder, polyvinylidene fluoride (PVdF), polytetrafluoroethylene (PTFE), fluororubber, polyimide, latex, styrene-butadiene copolymer, acrylic copolymer and the like. The content of the binder in the positive electrode active material layer is preferably 0 part by weight or more and 20 parts by weight or less, and more preferably 0.1 part by weight or more and 15 parts by weight or less, relative to 100 parts by weight of the positive electrode active material.

(pH Adjuster)

When water is used as the solvent for the coating solution for forming a positive electrode active material layer, the coating solution may become alkaline by adding an alkali metal compound. Therefore, a pH adjuster may be added to the positive coating solution for forming a positive electrode active material layer, as necessary. Examples of the pH adjuster include, but are not limited to, hydrogen halides such as hydrogen fluoride, hydrogen chloride and hydrogen bromide; halogen oxoacids such as hypochlorous acid, chlorous acid and chloric acid; carboxylic acids such as formic acid, acetic acid, citric acid, oxalic acid, lactic acid, maleic acid and fumaric acid; sulfonic acids such as methanesulfonic acid, benzenesulfonic acid and p-toluenesulfonic acid; and acids such as nitric acid, sulfuric acid, phosphoric acid, boric acid and carbon dioxide.

[Positive Electrode Current Collector]

The material constituting the positive electrode current collector is not particularly limited as long as it is a material that has high electron conductivity and does not undergo degradation by elution into the electrolytic solution or reaction with the electrolyte or ion, but a metal foil is preferred. The positive electrode current collector in the nonaqueous alkali metal power storage element according to the present disclosure is more preferably an aluminum foil.

The metal foil may be a common metal foil without ruggedness or through-holes, or it may be a metal foil having ruggedness formed by embossing, chemical etching, electrolytic deposition, blasting or the like, or it may be a metal foil having through-holes, such as an expanded metal, punching metal and etching foil. From the viewpoint of the doping treatment to be mentioned below, a nonporous aluminum foil is further preferred, and the surface thereof is particularly preferably roughened. The thickness of the positive electrode current collector is not particularly limited as long as it can adequately maintain the shape and strength of the positive electrode, but is preferably, for example, 1 $\mu$m or more and 100 $\mu$m or less.

An anchor layer containing a conductive material, such as graphite, scaly graphite, carbon nanotubes, graphene, Ketjen black, acetylene black or vapor-grown carbon fibers is preferably arranged on the surface of the metal foil. The electrical conduction between the positive electrode current collector and the positive electrode active material can be improved by arranging the anchor layer, and the resistance can be lowered. The thickness of the anchor layer is preferably 0.1 $\mu$m or more and 5 $\mu$m or less per one side of the positive electrode current collector.

The thickness of the positive electrode active material layer of the positive electrode precursor according to the present disclosure is preferably 10 $\mu$m or more and 200 $\mu$m or less for each side of the positive electrode current collector. The thickness of the positive electrode active material layer per side is more preferably 20 $\mu$m or more and 100 $\mu$m or less, and still more preferably 30 $\mu$m or more and 80 $\mu$m or less, for each side. When the thickness is 10 $\mu$m or more, sufficient charge/discharge capacity can be exhibited. When the thickness is 200 $\mu$m or less, on the other hand, the ion diffusion resistance in the electrode can be maintained low. Therefore, not only sufficient output characteristic can be obtained but also the cell volume can be reduced, which accordingly enables to increase the energy density. Incidentally, when the current collector has through-holes or ruggedness, the thickness of the positive electrode active material layer is the mean value of the thickness for each side at the portions of the current collector without through-holes or ruggedness.

<Negative Electrode>

The negative electrode in the nonaqueous alkali metal power storage element of the present disclosure typically includes a negative electrode current collector layer and a negative electrode active material layer formed on one or both sides of the negative electrode current collector.

[Negative Electrode Active material Layer]

The negative electrode active material layer preferably contains a negative electrode active material, and it may further contain optional components such as a dispersing agent, a conductive filler, a binder and metal oxide, as necessary.

For the negative electrode in the present disclosure, there are a bright field region and a plurality of dark field regions corresponding to deposits formed on the surface of the negative electrode active material layer in an image obtained by binarizing a secondary electron image of the surface of the negative electrode active material layer, taken at a magnification of 100 times using a scanning electron microscope without exposing to air, with the brightness of each pixel (hereinafter also simply referred to as "binarized image"). The dark field regions are discrete compared to the bright field region, and it is preferable that a plurality of independent dark field regions surrounded by the bright field region are present. The total area of the dark field regions is preferably smaller than the total area of the bright field regions. In contrast, the bright field region is preferably continuous compared to the dark field regions. However, there is no need for the bright field region to be a single region, and a plurality of independent dark field regions surrounded by the bright field region may be present.

For the negative electrode in the present disclosure, in the binarized image, the maximum value of the area occupied by each of the dark field regions when one pixel is 1.46 $\mu$m (hereinafter also simply referred to as "maximum area of dark field region") S [pixel$^2$] is 4,000 or less, and preferably 4000 or less and 500 or more, in the binarized image. In other words, the maximum area S of the dark field regions is the area of the dark field region that is the largest among the plurality of the dark field regions that exist. The upper limit of the maximum area S of the dark field regions is 4,000 or less, preferably 3,500 or less, and more preferably 3,000 or less. The lower limit of the maximum area S of the dark field regions, which can be arbitrarily combined with these upper limits, is not particularly limited, but may be 500 or more, 1,000 or more, 1,500 or more, 2,000 or more, 2,400 or more, or 2,408 or more. Particularly, the maximum area S of the dark field regions is preferably 2,408 or more and 3,000 or less.

The nonaqueous alkali metal power storage element of the present disclosure can provide a nonaqueous lithium power storage element with high durability under high-temperature cycling because the maximum area S of the dark field regions of the negative electrode is 4000 or less. The present inventors consider the reason for this to be as follows, without being limited to theory. That is, in the alkali metal doping step, typically, the electrolytic solution is decomposed to form a solid electrolyte interphase (SEI) coating film on the surface of the negative electrode. At this time, in a conventional nonaqueous lithium power storage element, relatively large ruggedness is formed on the surface of the SEI coating film. It was found that deposits derived from alkali metal are likely to accumulate on the convex portions of the SEI coating film, and that the deposits hinder the insertion of lithium ions into the negative electrode active material layer during charge/discharge cycles, particularly during high-temperature cycles. In the recess portions of the SEI coating film, current concentration during charge/discharge cycles can cause deactivation of lithium ions, particularly during high-temperature cycles. In contrast, in the nonaqueous alkali metal power storage element of the present disclosure, the maximum area S [pixel$^2$] of the dark field regions is adjusted to 4,000 or less. The smaller the value of the maximum area of the dark field regions leads to more uniform distribution of the deposits formed on the surface of the negative electrode, which results in more efficient in and out of lithium ions into and from the negative electrode active material layer during high-temperature cycling. Therefore, according to the nonaqueous alkali metal power storage element of the present disclosure, a nonaqueous lithium power storage element with high durability under high-temperature cycling can be provided.

The dark field regions correspond to deposits accumulated on the surface of the negative electrode active material layer. The deposits are considered to be derived from by-products produced in the alkali metal doping step, and preferably contain, but are not limited to, compounds derived from alkali metals, and more preferably compounds derived from metallic lithium (Li).

In the binarized image, the mean value of the area occupied by each dark field region when one pixel is 1.46 $\mu$m (hereinafter also simply referred to as "mean area of dark field region") is T [pixel$^2$], the upper limit of T is preferably 800 or less, more preferably 700 or less, still more preferably 600 or less, yet more preferably 500 or less, and particularly preferably 400 or less. The lower limit of the mean area T of the dark field regions, which can be arbitrarily combined with these upper limits, is not particularly limited, but may be preferably 50 or more, 100 or more, 150 or more, or 200 or more. Without being limited to this theory, the disclosed nonaqueous alkali metal power storage element has a mean area T of the dark field region of the negative electrode within the above range, so that the distribution of deposits formed on the surface of the negative electrode is more uniform, thus making it possible to provide a nonaqueous lithium power storage element having higher high-temperature cycle durability.

(Negative Electrode Active Material)

The negative electrode active material can be a material capable of occluding and releasing alkali metal ions. Specific examples thereof include carbon materials, titanium oxides, silicon, silicon oxides, silicon alloys, silicon compounds, tin and tin compounds.

The negative electrode active material of the present embodiment preferably contains a carbon material. Examples of the carbon materials include non-graphitizable carbon materials; easily graphitizable carbon materials; carbon black; carbon nanoparticles; active carbon; artificial graphite; natural graphite; graphitized mesophase carbon microspheres; graphite whiskers; amorphous carbonaceous materials such as polyacene-based materials; carbonaceous materials obtained by heat treatment of carbon precursors such as petroleum pitch, coal pitch, mesocarbon microbeads, coke and synthetic resins (for example, phenol resins, etc.); thermal decomposition products of furfuryl alcohol resins or novolac resins; fullerenes; carbon nanofibers; and composite carbon materials thereof.

Of these, from the viewpoint of lowering the resistance of the negative electrode, preferred are composite carbon materials obtained by heat treating a combination of: (1) at least one type of graphite material selected from among artificial graphite, natural graphite, and (2) graphitized mesophase carbon microspheres, graphite whiskers and high area-to-weight ratio graphite, and at least one type of carbonaceous material precursor such as petroleum pitch, coal pitch, mesocarbon microbeads, coke or a synthetic resin (such as a phenol resin) to form a complex of the graphite material and the carbonaceous material derived from the carbonaceous material precursor. There are no particular limitations on the carbonaceous material precursor as long as it becomes a carbonaceous material upon heat treatment, but petroleum pitch or coal pitch is particularly preferred.

The BET specific surface area of the composite carbon material is preferably 1 $m^2$/g or more and 50 $m^2$/g or less, more preferably 1.5 $m^2$/g or more and 40 $m^2$/g or less, and still more preferably 2 $m^2$/g or more and 25 $m^2$/g or less. If the BET specific surface area of the composite carbon material is 1 $m^2$/g or more, it will be possible to ensure an adequately large number of reaction sites with lithium ions in the nonaqueous electrolytic solution, thereby allowing a high input/output characteristic to be exhibited. If the BET specific surface area of the composite carbon material is 50 $m^2$/g or less, the lithium ion charge/discharge efficiency will be increased and reductive decomposition of the nonaqueous electrolytic solution during charge/discharge will be inhibited, thus allowing a high high-load charge/discharge cycle characteristic to be exhibited.

The mean pore size of the composite carbon material is preferably 1.5 nm or more and 25 nm or less, more preferably 2 nm or more and 22 nm or less, still more preferably 3 nm or more and 20 nm or less, and particularly preferably 3.5 nm or more and 18 nm or less. If the mean pore size of the composite carbon material is 1.5 nm or more, there will be more pores with sizes more than lithium ion solvated in the nonaqueous electrolytic solution (about 0.9 nm to 1.2 nm), and therefore diffusion of the solvated lithium ion in the composite carbon material will be satisfactory, and a nonaqueous lithium power storage element using it can exhibit a high input/output characteristic. If the mean pore size of the composite carbon material is 25 nm or less, on the other hand, the bulk density of the negative electrode active material layer using it can be sufficiently increased, and therefore high energy density can be exhibited.

The composite carbon material may be in particulate form, with a mean particle size of preferably 1 $\mu$m or more and 10 $\mu$m or less, more preferably 2 $\mu$m or more and 8 $\mu$m or less, and still more preferably 3 $\mu$m or more and 6 $\mu$m or less. If the mean particle size of the composite carbon material is 1 $\mu$m or more it will be possible to increase the lithium ion charge/discharge efficiency, and to thus exhibit a high high-load charge/discharge cycle characteristic. If the mean particle size of the composite carbon material is 10 $\mu$m or less, the number of reaction sites with lithium ions in the nonaqueous electrolytic solution will increase, allowing a high input/output characteristic to be exhibited.

The weight ratio of the carbonaceous material relative to the graphite material in the composite carbon material is preferably 1% by weight or more and 20% by weight or less, more preferably 1.2% by weight or more and 15% by weight or less, still more preferably 1.5% by weight or more and 10% by weight or less, and yet more preferably 2% by weight or more and 5% by weight or less. If the weight ratio of the carbonaceous material is 1% by weight or more, the number of reaction sites with lithium ion in the nonaqueous electrolytic solution can be adequately increased by the carbonaceous material, and desolvation of the lithium ion will be facilitated, thus allowing a high input/output characteristic to be exhibited. If the weight ratio of the carbonaceous material is 20% by weight or less, it will be possible to satisfactorily maintain solid diffusion of lithium ions between the carbonaceous material and graphite material, and therefore a high input/output characteristic can be exhibited. The lithium ion charge/discharge efficiency can be increased, and consequently a higher high-load charge/discharge cycle characteristic can be exhibited.

The composite carbon material is preferably doped with alkali metal ions. In this case, the doping amount (mAh/g) of alkali metal ions per unit weight of the composite carbon material is preferably 50 mAh/g or more and 700 mAh/g or less, more preferably 70 mAh/g or more and 650 mAh/g or less, still more preferably 90 mAh/g or more and 600 mAh/g or less, and yet more preferably 100 mAh/g or more and 550 mAh/g or less. Since the life of the nonaqueous lithium power storage element can be extended as the Li doping amount is larger, the doping amount (%) of the alkali metal ions is preferably 80% or more and 100% or less, and more preferably 85% or more and 100% or less.

(Other Components of Negative Electrode Active Material Layer)

The negative electrode active material layer may contain, in addition to the negative electrode active material, optional components such as a dispersing agent, a conductive filler, a binder, as necessary. The dispersing agent, conductive filler and binder in the positive electrode active material layer may be used by appropriately selecting from those exemplified above as the dispersing agent, conductive filler and binder in the negative electrode active material layer, respectively.

The content of the dispersing agent and binder in the positive electrode active material layer may be within the ranges mentioned above for the content of the dispersing agent and binder in the negative electrode active material, respectively. The amount of the conductive filler mixed in the negative electrode active material layer is preferably within a range of 25 parts by weight or less, and more preferably 5 parts by weight or more and 20 parts by weight or less, relative to 100 parts by weight of the negative electrode active material.

(Thickness of Negative Electrode Active Material Layer)

The thickness of the negative electrode active material layer is preferably 10 $\mu$m or more and 70 $\mu$m or less per side, and more preferably 20 $\mu$m or more and 60 $\mu$m or less. If the thickness is 10 $\mu$m or more, satisfactory charge/discharge capacity can be exhibited. On the other hand, if the thickness is 70 $\mu$m or less, the cell volume can be reduced, thus making it possible to increase the energy density. When the negative electrode current collector has holes, the thickness of the negative electrode active material layer refers to the mean thickness per side of the portion of the negative electrode current collector that does not have holes.

[Negative Electrode Current Collector]

The material constituting the negative electrode current collector according to the present disclosure is preferably a material with high electron conductivity and without deterioration by elution into the electrolytic solution or reaction with the electrolyte or ion, and may be, for example, metal foil. Examples of such metal foils include, but are not limited to, aluminum foils, copper foils, nickel foils, stainless steel copper foils and the like. The negative electrode current collector in the nonaqueous alkali metal power storage element is preferably a copper foil. The metal foil as the negative electrode current collector may be a common metal foil without ruggedness or through-holes, or it may be a metal foil having ruggedness formed by embossing, chemical etching, electrolytic deposition, blasting or the like, or it may be a metal foil having through-holes, such as an expanded metal, punching metal, and etching foil. The thickness of the negative electrode current collector may be a thickness that allows the shape and strength of the negative electrode to be sufficiently maintained, and is, for example, 1 $\mu$m or more and 100 $\mu$m or less.

<Separator>

The positive electrode precursor and negative electrode may be stacked or wound via a separator to form an electrode stacked body or electrode wound body comprising a positive electrode precursor, a negative electrode and a separator. The separator used may be a polyolefin microporous membrane such as a polyethylene microporous membrane or polypropylene microporous membrane used in lithium-ion secondary batteries, or a cellulose nonwoven sheet used in electrical double layer capacitors, nonwoven fabric comprising a polyester-based resin. A film composed of organic or inorganic microparticles may also be stacked on one or both sides of these separators. Organic or inorganic microparticles may also be included inside a separator.

The thickness of the separator is preferably 5 $\mu$m or more and 35 $\mu$m or less. The thickness is preferably 5 $\mu$m or more, as this will tend to reduce self-discharge due to internal micro short-circuit. On the other hand, the thickness is also preferably 35 $\mu$m or less, as this will tend to result in higher input/output characteristics of the power storage element.

The thickness of a film composed of organic or inorganic microparticles is preferably 1 $\mu$m or more and 10 $\mu$m or less. The thickness of a film composed of organic or inorganic microparticles of 1 $\mu$m or more is preferred, as this will tend to reduce self-discharge due to internal micro short-circuit. The thickness 10 $\mu$m or less is also preferred as this will tend to result in higher input/output characteristics of the power storage element.

<Casing>

A metal can or laminated film can be used for the casing. The metal can is preferably made of aluminum. The metal can may be, for example, rectangular, round, cylindrical or the like in shape. The laminated film is preferably a film in which a metal foil and a resin film are stacked together, and examples thereof include a film having a three-layer configuration consisting of an outer layer resin film, a metal foil and an inner resin film. The outer layer resin film serves to prevent the metal foil from being damaged by contact, and a resin such as nylon or polyester can be preferably used. The metal foil is for preventing permeation of moisture and gas, and copper foil, aluminum foil or stainless-steel foil can be used preferably. The inner resin film protects the metal foil from the nonaqueous electrolytic solution housed therein while also serving to melt-seal the casing during heat-sealing, and polyolefin and acid-modified polyolefin can be used preferably.

<Electrolytic solution>

The electrolytic solution in the present disclosure is a nonaqueous electrolytic solution. That is, this electrolytic solution contains a nonaqueous solvent. The nonaqueous electrolytic solution contains an electrolyte salt containing alkali metal ions, for example, lithium ions. The content of the electrolyte salt is preferably 0.5 mol/L or more, based on the total amount of the nonaqueous electrolytic solution. That is, the nonaqueous electrolytic solution contains an alkali metal salt as an electrolyte. Examples of the nonaqueous solvent contained in the nonaqueous electrolytic solution include cyclic carbonates such as ethylene carbonate and propylene carbonate, and chain carbonates such as dimethyl carbonate, diethyl carbonate and ethyl methyl carbonate.

The nonaqueous electrolytic solution preferably further contains, in addition to the electrolyte salt, a cyclic compound selected from a cyclic carbonate and a cyclic sulfate, and more preferably contains a cyclic carbonate and a cyclic sulfate. The cyclic carbonate can be contained in the nonaqueous electrolytic solution as a nonaqueous solvent. The cyclic sulfate can be contained as an additive in the nonaqueous electrolytic solution, and has the function of forming a high-quality coating film by decomposing on the surface of the negative electrode. When the nonaqueous electrolytic solution contains a cyclic compound selected from a cyclic carbonate and a cyclic sulfate, an SEI coating film with satisfactory composition can be formed on the negative electrode surface, and it is easy to form a coating film with high protective function that can suppress side reactions that occur on the negative electrode surface. As a result, the durability of the completed nonaqueous lithium power storage element is improved. Examples of the cyclic carbonate include alkylene carbonates such as ethylene carbonate and propylene carbonate. Examples of the cyclic sulfate ester include alkylene sulfates such as ethylene sulfate (1,3,2-dioxathiolane-2,2-dioxide).

Examples of the electrolyte salt containing alkali metal ions that dissolve in nonaqueous solvents as mentioned above include $MFSI$, $MBF_4$, $MPF_6$, $MClO_4$, $LiB(C_2O_4)_2$, $LiBF_2(C_2O_4)$ and the like, where M is Li, Na, K, Rb, or Cs. The nonaqueous electrolytic solution in the present disclosure may contain at least one type of alkali metal ion, and may contain two or more types of alkali metal salts, or may contain alkali metal salts and alkaline earth metal salts selected from a beryllium salt, a magnesium salt, a calcium salt, a strontium salt and a barium salt. When a nonaqueous electrolytic solution contains two or more types of alkali metal salts, the presence of cations with different Stoke radius in the nonaqueous electrolytic solution can suppress an increase in viscosity at low temperature, thus improving the low-temperature characteristics of the nonaqueous alkali metal power storage element. When the nonaqueous electrolytic solution contains alkaline earth metal ions other than the above alkali metal ions, the capacity of the nonaqueous alkali metal power storage element can be increased.

Examples of the method in which two or more types of alkali metal salts are contained in the nonaqueous electrolytic solution, or the method in which an alkali metal salt and an alkaline earth metal salt are contained in the nonaqueous electrolytic solution include, but are not limited to, a method in which an alkali metal salt consisting of two or more types of alkali metal ions is previously dissolved in the nonaqueous electrolytic solution, a method in which an alkali metal salt and an alkaline earth metal salt are previously dissolved in the nonaqueous electrolytic solution, and a method in which carbonates such as $M_2CO_3$, oxides such as $M_2O$, hydroxides such as MOH, halides such as MF and MCl; carboxylates such as RCOOM (wherein R is H, an alkyl group or an aryl group); and alkaline earth metal carbonates selected from $BeCO_3$, $MgCO_3$, $CaCO_3$, $SrCO_3$ or $BaCO_3$, as well as one or more types elected from alkaline earth metal oxides, alkaline earth metal hydroxides, alkaline earth metal halides and alkaline earth metal carboxylates are contained in the positive electrode precursor, where M in the following formula is one or more selected from Na, K, Rb and Cs, followed by decomposition in a pre-doping step mentioned later.

The electrolyte salt concentration in the electrolytic solution is preferably within a range of 0.5 to 2.0 mol/L. At the electrolyte salt concentration of 0.5 mol/L or more, a sufficient amount of anions are present, and the capacity of the nonaqueous alkali metal power storage element is maintained. On the other hand, at the electrolyte salt concentration of 2.0 mol/L or less, the salt dissolves sufficiently in an electrolytic solution, and the electrolytic solution maintains appropriate viscosity and conductivity. When the nonaqueous electrolytic solution contains two or more types of alkali metal salts, or when the nonaqueous electrolytic solution contains an alkali metal salt and an alkaline earth metal salt, the total concentration of these salts is preferably within a range of 0.5 mol/L or more, and more preferably 0.5 to 2.0 mol/L.

The moisture content in the nonaqueous electrolytic solution is preferably 0 ppm or more and 500 ppm or less. If the moisture content is 0 ppm or more, the alkali metal compound in the positive electrode precursor can be dissolved slightly, so that pre-doping can be carried out under mild conditions, thus enabling an increase in capacity and a decrease in resistance. If the moisture content is 500 ppm or less, decomposition of the electrolyte is suppressed, and the high-temperature storage characteristics are improved. The moisture content in the electrolytic solution can be measured by the above-mentioned Karl Fischer method.

<<Method for Producing Nonaqueous Alkali Metal Power Storage Element>>

<Production of Positive Electrode Precursor>

In the present disclosure, the positive electrode precursor that is to be the positive electrode of the nonaqueous alkali metal power storage element can be produced by publicly known production techniques for electrodes for lithium-ion batteries, electrical double layer capacitors and the like. For example, the positive electrode active material and an alkali metal compound, as well as the other optional components that are used, as necessary, may be dispersed and dissolved in water or an organic solvent to prepare a slurry-like coating solution, and one or both sides of the positive electrode current collector is coated with the coating solution to form a coating film, which is dried to obtain a positive electrode precursor. The obtained positive electrode precursor may also be pressed to adjust the film thickness or bulk density of the positive electrode active material layer.

Preparation of the coating solution for forming a positive electrode active material layer is not particularly limited, but may be suitably carried out by using dispersing machines such as a homodisperser or multiscrew dispersing machine, planetary mixer or thin-film rotating-type high speed mixer. In order to obtain a coating solution in a satisfactorily dispersed state, it is preferred for the dispersion to be at a peripheral velocity of 1 m/s or more and 50 m/s or less. The peripheral velocity of 1 m/s or more is preferred because this will facilitate each material to satisfactorily dissolve or disperse. The peripheral velocity of 50 m/s or less is also preferred because each material will not be broken down by heat or shear force during dispersion, and reaggregation is suppressed.

The degree of dispersion of the coating solution is preferably to a granularity of 0.1 $\mu$m or more and 100 $\mu$m or less, as measured with a fineness gauge. The upper limit for the degree of dispersion is more preferably 80 $\mu$m or less, and still more preferably 50 $\mu$m or less, as the particle size measured with a particle gauge. If the particle size is within this range, the material is not crushed when preparing the coating solution, and nozzle clogging during coating or formation of streaks in the coating film are suppressed, thus enabling stable coating.

The viscosity ($\eta$b) of the coating solution for the positive electrode precursor is preferably 1,000 mPa·s or more and 20,000 mPa·s or less, more preferably 1,500 mPa·s or more and 10,000 mPa·s or less, and still more preferably 1,700 mPa·s or more and 5,000 mPa·s or less. When the viscosity ($\eta$b) is 1,000 mPa·s or more, liquid dripping during formation of the coating film will be inhibited, and the coating film width and thickness can be satisfactorily controlled. When it is 20,000 mPa·s or less, there will be less pressure loss in the flow channel of the coating solution when a coating machine is used, which facilitates stable coating to be carried out, thus enabling stable coating and facilitating control of the coating film thickness.

The TI value (thixotropy index value) of the coating solution is preferably 1.1 or more, more preferably 1.2 or more, and still more preferably 1.5 or more. When the TI value is 1.1 or more, the coating film width and film thickness can be satisfactorily controlled.

Formation of a coating film of the positive electrode active material layer is not particularly limited, and coating machines such as a die coater or comma coater, knife coater and gravure coating machine may be suitably used. The coating film may be formed by monolayer coating or by multilayer coating. In the case of multilayer coating, the coating solution compositions may be adjusted so that the content of each component in each coating layer differs. When the positive electrode current collector is coated with a coating film, multiple coatings, intermittent coating, or multiple intermittent coating may be carried out.

A sequential coating in which one side of the positive electrode current collector may be coated and dried, and then the other surface may be coated and dried in sequence, may be carried out or double-sided simultaneous coating in which both sides of the positive electrode current collector may be simultaneously coated with the coating solution, may be carried out. In this case, the difference in thickness between the positive electrode active material layers on the front and back surfaces of the positive electrode current collector is preferably 10% or less of the mean thickness of both. As the weight ratio and film thickness ratio of the positive electrode active material layer on the front and back surfaces are closer to 1.0, the charge/discharge load is not concentrated on one surface, and the high-load charge/discharge cycle characteristics are improved.

After forming the coating film of the positive electrode active material layer on the positive electrode current collector, the coating film is dried. The coating film of the positive electrode precursor is dried by an appropriate drying method such as hot air drying or infrared ray (IR) drying, preferably using far infrared rays, near infrared rays, or hot air. Drying of the coating film may be drying at a single temperature, or it may be drying while varying the temperature in different stages. Several drying methods may also be used in combination for drying.

The drying temperature is preferably 25°C or higher and 200°C or lower, more preferably 40°C or higher and 180°C or lower, and still more preferably 50°C or higher and 160°C or lower. When the drying temperature is 25°C or higher, it will be possible to adequately volatilize off the solvent in the coating film. When it is no higher than 200°C, on the other hand, it will be possible to reduce cracking of the coating film by rapid volatilization of the solvent or maldistribution of the binder by migration, and oxidation of the positive electrode current collector or positive electrode active material layer.

The moisture content of the positive electrode active material layer after drying is preferably 0.1% by weight or more and 10% by weight or less, where 100% by weight is the total weight of the positive electrode active material layer. If the moisture content is 0.1% by weight or more, it will be possible to inhibit degradation of the binder by excessive drying, and to lower the resistance. If the moisture content is 10% by weight or less, it will be possible to inhibit inactivation of the alkali metal ion and to obtain higher capacitance. When N-methyl-2-pyrrolidone (NMP) is used for preparation of the coating solution, the content of NMP in the dried positive electrode active material layer is preferably 0.1% by weight or more and 10% by weight or less, where 100% is the total weight of the positive electrode active material layer. The moisture content in the positive electrode active material layer can be measured by the Karl Fischer titration method (JIS 0068(2001), "Moisture measurement method for chemical products"). The amount of NMP in the positive electrode active material layer can be quantified by immersing the positive electrode active material layer for 24 hours in ethanol at the weight of 50 to 100 times the weight of the positive electrode active material layer, in an environment of 25°C to extract the NMP, and then measuring it by GC/MS and comparing it against a previously prepared calibration curve.

Pressing of the positive electrode active material layer is preferably carried out using a suitable pressing machine such as a hydraulic press, vacuum pressing machine or roll press. The film thickness, bulk density and electrode strength of the positive electrode active material layer can be adjusted by the pressing pressure, the gap between the press rolls, and the surface temperature of the pressed portion, as mentioned below. The pressing pressure is preferably 0.5 kN/cm or more and 20 kN/cm or less, more preferably 1 kN/cm or more and 10 kN/cm or less, and still more preferably 2 kN/cm or more and 7 kN/cm or less. If the pressing pressure is 0.5 kN/cm or more, it will be possible to adequately increase the electrode strength. If the pressing pressure is 20 kN/cm or less, there will be no distortion or wrinkling in the positive electrode precursor, and adjustment can be made to the desired film thickness and bulk density for the positive electrode active material layer. When a roll press is used for pressing, the gap between the press rolls may be set at an appropriate value so that the positive electrode active material layer has the desired thickness and bulk density. The pressing speed may be set at an appropriate speed, so as to avoid distortion and wrinkling in the positive electrode precursor.

The surface temperature of the pressed portion may be room temperature, or it may be heated as necessary. In the case of heating, the lower limit for the surface temperature of the pressed portion is preferably at least the melting point of the binder used minus 60°C, more preferably at least the melting point of the binder minus 45°C, and still more preferably at least the melting point of the binder minus 30°C. In the case of heating, the upper limit for the surface temperature of the pressed portion is preferably no higher than the melting point of the binder used plus 50°C, more preferably no higher than the melting point of the binder plus 30°C, and still more preferably no higher than the melting point of the binder plus 20°C

For example, when polyvinylidene difluoride (melting point: 150°C) is used as the binder, the pressed portion is preferably heated to 90°C or higher and 200°C or lower, more preferably 105°C or higher and 180°C or lower, and still more preferably 120°C or higher and 170°C or lower. When a styrene-butadiene copolymer (melting point: 100°C) is used as the binder, the pressed portion is preferably heated to 40°C or higher and 150°C or lower, more preferably 55°C or higher and 130°C or lower, and still more preferably 70°C or higher and 120°C or lower.

The melting point of the binder can be determined by the endothermic peak position in DSC (differential scanning calorimetry). For example, by using a "DSC7" differential scanning calorimeter manufactured by Perkin-Elmer, Inc., 10 mg of a sample resin is set in the measuring cell and the temperature is raised from 30°C to 250°C at a temperature-rising rate of 10°C/min, in a nitrogen gas atmosphere, the melting point being the endothermic peak temperature during the temperature rise.

Pressing may also be carried out multiple times while varying the conditions including the pressing pressure, gap, speed, and surface temperature of the pressed portion. In the case of multi-threaded coating of the positive electrode active material layer, it is preferred to form slits before pressing. If pressing of the positive electrode precursor is carried out without slitting the multi-threaded coated positive electrode active material layer, this may result in application of excessive stress onto the portions of the positive electrode current collector that have not been coated with the positive electrode active material layer, potentially forming wrinkles. The positive electrode active material layer may also be re-slitted after pressing.

In the nonaqueous alkali metal power storage element of the present disclosure, it is intended for alkali metal ions to be pre-doped in the negative electrode. The pre-doping method is preferably a method of applying a voltage between the positive electrode precursor and negative electrode, after the power storage element has been assembled using the positive electrode precursor containing an alkali metal compound, the negative electrode, the separator, the casing and the nonaqueous electrolytic solution. Voltage application results in decomposition of the alkali metal compound and release of cations in the positive electrode precursor, the cations being reduced at the negative electrode, thereby pre-doping the negative electrode. By carrying out the negative electrode alkali metal doping step, the positive electrode precursor of the present disclosure is converted to a positive electrode. Decomposition of the alkali compound in the positive electrode active material layer of the positive electrode, which has been subjected to the negative electrode alkali metal doping step, causes formation of pores and increases the effective area of the positive electrode active material layer.

Since the alkali metal compound in the positive electrode active material layer of the positive electrode precursor is used as a doping source for the negative electrode in the alkali metal doping step, the content of the alkali metal compound in the positive electrode active material layer of the positive electrode that has been subjected to the alkali metal doping step is lower than the content of the alkali metal compound in the positive electrode active material layer of the positive electrode precursor. The weight ratio C (% by weight) of the alkali metal compound relative to the total weight of the positive electrode active material layer of the positive electrode satisfies $0.1 \le C \le 7.0$, preferably $0.5 \le C \le 6.0$, more preferably $1.0 \le C \le 5.0$, and still more preferably $1.5 \le C \le 4.5$.

<Production of Negative Electrode>

The negative electrode can be produced by forming a negative electrode active material layer on one or both sides of a negative electrode current collector. In a typical aspect, the negative electrode active material layer is anchored to the negative electrode current collector. The negative electrode can be produced by publicly known electrode production techniques for lithium-ion batteries, electrical double layer capacitors and the like. For example, various materials containing negative electrode active materials each may be dispersed and dissolved in water or an organic solvent to prepare a slurry-like coating solution, and one or both sides of a negative electrode current collector is coated with the coating solution to form a coating film, which is dried to obtain a negative electrode. The obtained negative electrode may also be pressed to adjust the thickness or bulk density of the negative electrode active material layer. Preparation of the coating solution for forming a negative electrode active material layer, coating of the coating solution onto the negative electrode current collector, drying of the coating film, and pressing can each be carried out in accordance with the method mentioned above for producing a positive electrode precursor.

<Assembly Step: Fabrication of Electrode Body>

In the assembly step, for example, a positive electrode precursor and negative electrode cut into the form of sheets are stacked with a separator interposed therebetween to obtain an electrode stacked body, and a positive electrode terminal and a negative electrode terminal are connected to the electrode stacked body. Alternatively, a positive electrode precursor and negative electrode are stacked and wound with a separator interposed therebetween to obtain an electrode wound body, and a positive electrode terminal and a negative electrode terminal are connected to the electrode wound body. The shape of the electrode wound body may be a cylindrical shape or a flat type.

There is no particular limitation on the method used to connect the positive electrode terminal and negative electrode terminal and these terminals are connected by a method such as resistance welding or ultrasonic welding. The electrode body connected to the terminals (electrode stacked body or electrode wound body) is preferably dried to remove the residual solvent. There is no particular limitation on the drying method, and drying is carried out by vacuum drying or the like. The amount of the residual solvent per weight of the positive electrode active material layer or negative electrode active material layer is preferably 1.5% by weight or less. When the amount of the residual solvent exceeds 1.5% by weight, the solvent remains within the system which causes exacerbation of self-discharging characteristics, which thereby makes this undesirable.

The dried electrode body is preferably housed in a casing typified by a metal can or a laminated film in a dry environment with a dew point of -40°C or lower, and is preferably sealed except for one opening for injecting the nonaqueous electrolytic solution. If the dew point is higher than - 40°C, moisture adheres to the electrode body, and water remains in the system, thus causing undesirable deterioration of the self-discharging characteristics. The method for sealing the casing is not particularly limited, but methods such as heat sealing and impulse sealing can be used.

<Solution Injection, Impregnation and Sealing Steps>

Following the assembly step, the nonaqueous electrolytic solution is injected into the electrode body enclosed within the casing. After solution injection, further impregnation is preferably carried out to thoroughly immerse the positive electrode precursor, negative electrode and separator in the nonaqueous electrolytic solution. In the state in which at least a portion of the positive electrode precursor, negative electrode and separator is immersed in the electrolytic solution, alkali metal doping proceeds unevenly in an alkali metal doping step mentioned below, and thus the resistance of the resulting nonaqueous alkali metal power storage element increases or durability deteriorates. There is no particular limitation on the impregnation method, and a method that can be used consists of installing the electrode body in pressure reduction chamber following injection of electrolytic solution with the casing left open, reducing pressure inside the chamber by using a vacuum pump, and then returning the pressure inside the chamber to atmospheric pressure. After impregnation, the electrode body is sealed with the casing open while reducing pressure, to seal inside the casing.

<Alkali Metal Doping Step>

In the alkali metal doping step, the negative electrode active material layer is preferably pre-doped with alkali metal ions by applying a voltage between the positive electrode precursor and negative electrode to decompose the alkali metal compound contained preferably in the positive electrode precursor and release alkali metal ions followed by reducing alkali metal ions at the negative electrode.

In the alkali metal doping step, the alkali metal compound may be contained in the positive electrode precursor in any aspect. For example, the alkali metal compound may be present between the positive electrode current collector and the positive electrode active material layer, or may be present on the surface of the positive electrode active material layer. The alkali metal compound is preferably contained in a positive electrode active material layer formed on the positive electrode current collector of the positive electrode precursor.

In the alkali metal doping step, gas such as $CO_2$ is generated accompanying oxidative decomposition of the alkali metal compound in the positive electrode precursor. Therefore, when applying a voltage, it is preferable to devise a means for releasing the generated gas outside the casing. Such a means includes, for example, a method consisting of applying voltage with a portion of the casing open, and a method consisting of applying voltage with a suitable gas release means such as a degassing valve or gas-permeable film installed in a portion of the casing.

In order to adjust the maximum area S [pixel$^2$] and mean area T [pixel$^2$] of the dark field regions of the negative electrode within the range and preferred range of the present disclosure, it is preferable to form a SEI coating film on the negative electrode surface of the negative electrode more uniformly (with smaller ruggedness) in the alkali metal doping step. In conventional alkali metal doping step, doping is typically carried out at a constant current rate (constant current value) that causes oxidative decomposition of the alkali metal compound until reaching a target voltage. In contrast, the present inventors have found that in the alkali metal doping step, the SEI coating film can be formed more uniformly (with less ruggedness) on the negative electrode surface of the negative electrode by undergoing the stage of forming the SEI coating film at a relatively low current rate before charging at a current rate high enough to cause oxidative decomposition of the alkali metal compound.

More specifically, the current rate (also referred to as "C rate") in the film formation stage (first doping step) in the alkali metal doping step is preferably 0.05 C or more and 0.20 C or less. Here, the C rate is a relative ratio of the current during charging (discharging) to the charge capacity (discharge capacity), and the current value that completely charges (or discharges) a certain charge capacity (discharge capacity) in one hour is defined as 1 C. The C rate in the present disclosure is calculated by the method mentioned in "C rate calculation method" mentioned later, and 1 C corresponds to 4.0 A. If the current value is preferably 0.05 C or more, the time required for the process is shortened, thus increasing the production efficiency. If the current value is preferably 0.20 C or less, an SEI coating film with a uniform thickness tends to be formed, making it easy to adjust the maximum area S [pixel$^2$] of the dark field regions of the negative electrode within the range and preferred range of the present disclosure. As a result, the high-temperature durability of the completed nonaqueous lithium power storage element is improved. The film formation stage is preferably carried out by, but is not limited to, charging until reaching a voltage of, for example, 4.1 V or more and 4.3 V or less, and more preferably by constant current charging.

The C rate of the current value in the stage where the oxidative decomposition of the alkali metal compound occurs (second doping step) is preferably 0.25 C or more and 1.0 C or less. If the current value is 0.25 C or more, sufficient charge is supplied during the oxidative decomposition of the alkali metal compound, and pre-doping can be carried out efficiently. If the current value is 1.0 C or less, heat generation in the cell can be suppressed, side reactions can be suppressed, and pre-doping can be carried out efficiently. The oxidative decomposition stage is preferably, but not limited to, charging until reaching a voltage of, for example, 4.4 V or more and 4.6 V or less, more preferably constant current charging, and still more preferably constant current charging followed by constant voltage charging. There is no limitation, but the constant voltage charging preferably continue for, for example, 1 hour or more and 5 hours or less.

<Cycle Aging Step>

After the alkali metal doping step, cycle aging is preferably carried out. In the cycle aging step, discharging the voltage between the positive electrode and the negative electrode to a predetermined lower limit voltage and charging to a predetermined upper limit voltage are repeated a predetermined number of times. By carrying out cycle aging, the SEI coating film formed in the alkali metal doping step is stabilized.

<Aging Step>

Aging is preferably carried out on the electrode body after the alkali metal doping step. The SEI coating film thus formed can be stabilized by carrying out aging. Examples of the aging method include, but are not particularly limited to, a method in which the electrode body is held in a high-temperature environment for a predetermined period of time or the like.

<Degassing Step>

After the aging step, degassing is preferably carried out to reliably remove gas remaining in the electrolytic solution, positive electrode and negative electrode. In a state where gas remains in at least a portion of the nonaqueous electrolytic solution, positive electrode and negative electrode, the resistance of the resulting nonaqueous alkali metal power storage element increases due to inhibition of ion conduction. There is no particular limitation on the method of degassing, but it is possible to use a method in which the electrode body is installed in a pressure reduction chamber with the casing left open and then pressure inside the chamber is reduced by using a vacuum pump. After degassing, the casing is sealed to hermetically close the casing, thus completing the fabrication of a nonaqueous alkali metal power storage element.

< <Applications of Nonaqueous Lithium Power Storage Element> >

A plurality of nonaqueous lithium power storage elements according to the present disclosure may be connected in series or in parallel to fabricate a power storage module. Since the nonaqueous lithium power storage element and power storage module of the present disclosure can also achieve both high input/output characteristics and safety at high temperature. Therefore, they may be suitably utilized in a regeneration power assist system, power load leveling system, uninterruptible power supply system, contactless power supply system, energy harvesting system, power storage system, solar power generation power storage systems, electric power steering system, emergency power supply system, in-wheel motor system, idling stop system, rapid charging system, smart grid system and the like.

Since the nonaqueous lithium power storage element according to the present disclosure can achieve both high input/output characteristics and safety at high temperatures, it can be installed in, for example, vehicles such as electric vehicles, plug-in hybrid vehicles, hybrid vehicles and electric motorcycles. The above-described power regeneration assist system, electric power steering system, emergency power supply system, in-wheel motor system, idling stop system, or a combination thereof is suitably installed in vehicles.

Examples

Hereinafter, Examples and Comparative Examples of a nonaqueous lithium power storage element according to the present disclosure will be described in detail. However, the nonaqueous lithium power storage element according to the present disclosure is not limited in any way by the following Examples and Comparative Examples.

<<Measurements and Evaluation Methods>>

<Calculation Method of C Rate>

In the present disclosure, the C rate is a value obtained by the following method. That is, before carrying out initial charging, a laminate-type negative electrode monopolar cell is placed in a thermostatic chamber set at a temperature of 25°C, and the total charging capacity when carrying out constant current charging to a voltage of 10 mV and constant voltage charging at a voltage of 10 mV at a current value of 0.16 mA/cm$^2$ per negative electrode area is defined as $Q_0$[Ah/g]. At this time, the constant voltage charging at a voltage of 10 mV was continued until the current value during the constant voltage charging became less than 1.0 mA. When the total weight of the negative electrode active material and the carbon black conductive additive contained in the negative electrode is G [g], $Q_0 \times$ G corresponds to 1 C of the nonaqueous lithium power storage element.

<Acquisition Method and Binarization Method of SEM Images>

In the present disclosure, the method of acquiring an SEM image of the surface of the negative electrode active material layer and the method of binarizing the SEM image are as follows. That is, after the voltage of the nonaqueous lithium power storage element is adjusted to 4.0 V, the casing is removed in an argon box, and the negative electrode is taken out from the electrode stacked body. The removed negative electrode is cut into a size of 1 cm square, washed with a carbonate-based solvent and air-dried to obtain a SEM image of the surface of the negative electrode active material layer without exposing to air. Detailed measurement conditions for the SEM image are as follows.

Measurement equipment: Field emission scanning electron microscope SU8220, manufactured by Hitachi High-Technologies Corporation

Acceleration voltage: 1 kV
Measurement magnification: 100 times

Detector: Secondary electron detector

From the SEM image at a magnification of 100 times obtained above, the portion corresponding to the scale bar is trimmed off. The image thus obtained is filtered using a Gaussian filter with a filter size of ($7 \times 7$), and binarized using Otsu's binarization method. Subsequently, a closing process with a kernel size ($2 \times 2$) is carried out three times for the iteration number, thus obtaining a binarized SEM image.

<Calculation of Maximum Area S and Mean Area T of Dark Field Regions>

The entire contour of the low brightness area (dark field region) is detected from the binarized SEM image, and the area occupied by each pixel that constitutes the dark field regions is calculated. Then, the maximum area S [$pixel^2$] and mean area T [$pixel^2$] of the dark field regions are calculated. However, of the pixels occupying the dark field regions, areas with an area of less than 100 pixels and areas with an area of 300,000 pixels or more are considered to be noise and are excluded from the calculation of the maximum area and mean area.

<High-Temperature Cycle Test>

The nonaqueous lithium power storage element was placed in a thermostatic chamber and a charge/discharge cycle test was carried out for 1,000 hours at a voltage within a range of 3.95 V to 2.80 V. During the cycle test, the temperature of the nonaqueous lithium power storage element was adjusted to 65°C in a thermostatic chamber.

<Fabrication of Coin-Type Negative Electrode Monopolar Cell>

In an argon box, the target negative electrode is cut out into a circle with a diameter of 16 mm. At this time, if the negative electrode used is a double-sided coated product, the composite layer on one side is peeled off using a carbonate solvent and a rag, and then the negative electrode is cut out. Thereafter, metallic Li cut into a circle having a diameter of 15 mm, a glass filter cut into a circle having a diameter of 24 mm, and a separator cut into a circle having a diameter of 24 mm are stacked in this order on a metal jig, and 0.1 mL of electrolytic solution is injected. Subsequently, the target negative electrode is placed on the separator, the top lid of the jig is attached, and then a metal tab is attached to obtain a coin cell.

<Measurement of Li Doping Amount>

In the present disclosure, the Li doping amount is a value obtained by the following procedures (1) to (4).

(1) After adjusting the voltage of a nonaqueous lithium power storage element to 4.0 V, a casing is removed in an argon box, and a negative electrode located at the 26th layer from the outermost layer of the electrode stacked body is taken out.
(2) Using the negative electrode, a coin-type negative single-electrode cell is produced by the procedure mentioned in aforementioned "Fabrication of Coin-Type Negative Electrode Monopolar Cell".
(3) The cell is placed in a thermostatic chamber set at a temperature of 25°C, and is subjected to constant current charging at a current value of 1.4 mA to a voltage of 5.0 mV, and constant voltage charging at a voltage of 5.0 mV. The total charge capacity at this time is defined as $Q_1$. The constant voltage charging at a voltage of 5.0 mV was continued until the current value during the constant voltage charging became less than 0.70 mA.
(4) Subsequently, the cell is placed in a thermostatic chamber set at 25°C and discharged at a constant current of 1.4 mA to a voltage of 2.5 V. The discharge capacity at this time is defined as $Q_2$. At this time, the Li doping amount F [%] is expressed as follows.

$$F = (Q_2 - Q_1) \times 100/Q_2$$

<Measurement of Li Deactivation Rate>

In the present disclosure, the Li deactivation rate is a value obtained by following procedures (1) to (5).

(1) Two nonaqueous lithium power storage elements fabricated by the same procedure are prepared, and one of them is subjected to a high-temperature cycle test by the method mentioned in aforementioned "High-Temperature Cycle Test". The other is to calculate the charge capacity $Q_1$ using the method mentioned in aforementioned "Measurement of Li Doping Amount".

(2) After carrying out the high-temperature cycle test, the voltage of the nonaqueous lithium power storage element is adjusted to 4.0 V and the casing is removed in an argon box, and then the negative electrode located at the 26th layer from the outermost layer of the electrode stacked body is taken out.

(3) Using the negative electrode thus taken out, a coin-type negative electrode monopolar cell is fabricated by the procedure mentioned in aforementioned "Fabrication of Coin-Type Negative Electrode Monopolar Cell".

(4) The cell is placed in a thermostatic chamber set at a temperature of 25°C, and is subjected to constant current charging at a current value of 1.4 mA to a voltage of 5.0 mV, and constant voltage charging at a voltage of 5.0 mV. The total charge capacity at this time is defined as $Q_3$. The constant voltage charging at a voltage of 5.0 mV was continued until the current value during the constant voltage charging became less than 0.70 mA.

(5) Subsequently, the cell is placed in a thermostatic chamber set at 25°C and discharged at a constant current of 1.4 mA to a voltage of 2.5 V. The discharge capacity at this time is defined as $Q_4$. When the time for which the high-temperature cycle test is carried out is T [hours], the Li deactivation rate D [%/$h^{1/2}$] after the high-temperature cycle test is expressed as follows.

$$D = (Q_3 - Q_1) \times 100/(Q_4 \times T^{1/2})$$

<<Example 1>>

<Production of Nonaqueous Lithium Power Storage Element>

[Preparation of Positive Electrode Active Material]

Pulverized coconut shell carbide is placed in a compact carbonization furnace and subjected to a carbonization treatment under a nitrogen atmosphere at 500°C for 3 hours to obtain a carbide. The resulting carbide was placed in an activation furnace and steam heated in a preheating furnace was introduced into the activation furnace at the rate of 1 kg/h to activate the carbide by raising the temperature to 900°C over 8 hours. The carbide was removed following activation and cooled in a nitrogen atmosphere to obtain activated carbon. The resulting activated carbon was washed by rinsing with water for 10 hours and then allowed to drain and, after drying for 10 hours in an electric dryer held at a temperature of 115°C, pulverization was carried out for 1 hour with a ball mill to obtain activated carbon 1.

The mean particle size of the activated carbon 1 was measured by using a laser diffraction-type particle size distribution measurement apparatus (SALD-2000J), manufactured by Shimadzu Corp. and found to be 5.5 $\mu$m. Fine pore size distribution of the activated carbon 1 was measured by using a pore size distribution measurement apparatus (AUTOSORB-1 AS-1-MP), manufactured by Yuasa Ionics Co., Ltd. As a result, BET specific surface area was 2,360 $m^2$/g, mesopore volume ($V_1$) was 0.52 $cm^3$/g, micropore volume ($V_2$) was 0.88 $cm^3$/g, and $V_1/V_2$ = 0.59.

[Production of Positive Electrode Precursor]

Activated carbon 1, lithium carbonate, carbon black, acrylic latex, CMC (carboxymethyl cellulose), PVP (polyvinylpyrrolidone) and distilled water were mixed so that the weight ratio of solids was 43.0%, and the mixture was kneaded under the conditions of 60 rpm using a kneading machine Hivismix, manufactured by PRIMIX Corporation to obtain a positive electrode coating solution 1. The positive electrode coating solution 1 was coated on both sides of an aluminum foil having a thickness of 15 $\mu$m under the conditions of a coating speed of 1 m/s using a die coater, manufactured by Toray Engineering Co., Ltd., and then dried at a drying temperature of 100°C, followed by pressing using a roll press machine under pressure of 4 kN/cm and a surface temperature of the press portion of 25°C, thus obtaining a positive electrode precursor 1. The thickness of the positive electrode active material layer of the positive electrode precursor 1 obtained above was determined by subtracting the thickness of the aluminum foil from the mean value of the thicknesses measured at any 10 points of the positive electrode precursor 1 using a film thickness meter Linear Gauge Sensor GS-551, manufactured by Ono Keiki Co., Ltd. As a result, the thickness of the positive electrode active material layer of the positive electrode precursor 1 was 70 $\mu$m per side.

[Production of Negative Electrode]

Artificial graphite, carbon black, CMC (carboxymethyl cellulose), SBR (styrene-butadiene rubber) latex and distilled water were mixed so that the weight ratio of solids was 34.0%, and the mixture was kneaded under the conditions of 60 rpm using a kneading machine Hivismix, manufactured by PRIMIX Corporation to obtain a negative electrode coating solution 1. The negative electrode coating solution 1 was coated on both sides of a copper foil having a thickness of 10 $\mu$m under the conditions of a coating speed of 1 m/s using a die coater, manufactured by Toray Engineering Co., Ltd., and then dried at a drying temperature of 85°C, followed by pressing using a roll press machine under pressure of 4 kN/cm and a surface temperature of the press portion of 25°C, thus obtaining a single-sided negative electrode 1 and a double-sided negative electrode 1. The thickness of the negative electrode active material layer of the double-sided negative electrode 1 obtained above was determined by subtracting the thickness of the copper foil from the mean value of the thicknesses measured at any 10 points of the negative electrode precursor 1 using a film thickness meter Linear Gauge Sensor GS-551, manufactured by Ono Keiki Co., Ltd. As a result, the thickness of the negative electrode active material layer of the double-sided negative electrode 1 was 30 $\mu$m per side.

[Preparation Example of Electrolytic solution]

A mixed solvent of ethylene carbonate (EC), ethyl methyl carbonate (EMC) and dimethyl methyl carbonate (DMC) was used as the organic solvent to dissolve the electrolyte salts so that the total concentration of $LiPF_6$ and LiFSI was 1.2 mol/L. Ethylene sulfate (1,3,2-dioxathiolane-2,2-dioxide) was added thereto as an additive, thus obtaining a nonaqueous electrolytic solution 1.

[Fabrication of Laminate-Type Negative Electrode Monopolar Cell>

The negative electrode active material layer of the single-sided negative electrode 1 was cut out into a size of 4.5 cm × 9.5 cm. Subsequently, the copper foil was cut out into a size of 4.6 cm × 9.6 cm, and a metallic lithium foil cut into a rectangular shape was stacked thereon, and then the lithium foil was pressed against the copper foil using a hand roller to obtain a metallic lithium counter electrode. Thereafter, a metallic lithium counter electrode, a glass filter, a separator, and a single-sided negative electrode 1 were stacked in this order to obtain an electrode stacked body. Two negative electrode terminals were ultrasonically welded to the obtained electrode stacked body and the electrode stacked body was then placed in a vessel made of an aluminum laminate packaging material, after which 3 sides including the electrode terminal portion were sealed by heat sealing. The electrode stacked body thus fabricated is defined as a negative electrode monopolar cell precursor 1.

[Solution Injection of Laminate-Type Negative Electrode Monopolar Cell]

About 6.0 g of the nonaqueous electrolytic solution 1 was injected into the casing housing the negative electrode monopolar cell precursor 1 produced by the above method in a dry air environment under atmospheric pressure, at a temperature of 25°C and a dew point of -40°C or lower. Subsequently, the casing housing the electrode stacked body and nonaqueous electrolytic solution was placed in a pressure reduction chamber and the pressure was reduced from atmospheric pressure to -87 kPa, after which it was restored to atmospheric pressure and left to stand for 5 minutes. Thereafter, the step of reducing the pressure of the casing in the chamber from atmospheric pressure to -87 kPa and then restoring to atmospheric pressure was repeated 4 times, and then it was left to stand for 15 minutes under atmospheric pressure. Through the above steps, the electrode stacked body was impregnated with the nonaqueous electrolytic solution 1. Thereafter, the electrode stacked body impregnated with the nonaqueous electrolytic solution 1 was placed in a vacuum sealer and sealed under pressure of 0.1 MPa at 180°C for 10 seconds under reduced pressure of -95 kPa, thus sealing the casing. The cell thus fabricated is defined as a negative electrode monopolar cell 1.

[Calculation of C Rate]

The C rate was calculated by charging and discharging the negative electrode monopolar cell using the method mentioned in aforementioned "Method for Calculation of C Rate". As a result, Q was 0.40 Ah/g and G was 10 g. Therefore, in the present disclosure, it was confirmed that 1C corresponds to 4.0A.

[Assembly Step]

The positive electrode precursor was cut into 25 sheets of a size of 8.4 cm × 11.0 cm for the positive electrode active material layer. Subsequently, both-sided negative electrode 1 was cut out into 26 sheets such that a size of the negative electrode active material layer was 8.8 cm × 11.2 cm, and a polyethylene separator (thickness 20 $\mu$m, manufactured by Asahi Kasei Corporation) was prepared. Using a laminating machine, manufactured by Hitachi Power Solutions Co., Ltd., the double-sided negative electrode 1, the separator and the positive electrode precursor were stacked in this order so that the outermost layer became double-sided negative electrode 1, thus obtaining an electrode stacked body. At this time, the separators were stacked in a zigzag shape. The positive electrode terminal and the negative electrode terminal were ultrasonically welded to the obtained electrode stacked body, placed in a container made of an aluminum laminate packaging material, and three sides including the electrode terminal portion were sealed by heat sealing.

[Solution Injection Step]

In a dry air environment at a temperature of 25°C and a dew point of -40°C or lower, about 70 g of nonaqueous electrolytic solution 1 at a liquid temperature of 25°C was injected into the electrode stacked body housed in an aluminum laminate packaging material. Thereafter, the electrode stacked body was placed in a pressure reduction chamber and the step of reducing the pressure in the chamber from atmospheric pressure to -91 kPa and then restoring to atmospheric pressure was repeated 5 times. Thereafter, the electrode body was removed from the chamber and left to stand under atmospheric pressure for 5 minutes. Through the above steps, the electrode stacked body was impregnated with the nonaqueous electrolytic solution. Subsequently, the nonaqueous lithium power storage element precursor was placed in a vacuum sealer and sealed under pressure of 0.1 MPa at 180°C for 10 seconds under reduced pressure of - 95 kPa, thus sealing the aluminum laminate packaging material. Thus, a nonaqueous lithium power storage element precursor 1 was fabricated.

[Alkali Metal Doping Step]

The resulting nonaqueous lithium power storage element precursor 1 was charged with a constant current at a current value of 0.40 A until the voltage reached 4.2 V in an environment at 45°C by using a charge/discharge apparatus (ACD-10APS(01)), manufactured by Asuka Denshi K.K. Subsequently, constant current charging was carried out at a current value of 1.3 A until the voltage reached 4.5 V, and then constant voltage charging was continued for 2.5 hours to perform alkali metal doping.

[Cycle Aging Step]

After completion of the alkali metal doping step, the nonaqueous lithium power storage element precursor 1 was subjected to constant current discharging at a current value of 6.0 A to a voltage of 2.0 V in an environment at a temperature of 45°C, and then constant voltage discharging was carried out at a voltage of 2.0 V for 10 minutes. Thereafter, regarding the following (1) and (2) as one cycle, 5 cycles in total were carried out.

(1) After carrying out constant current charging until the voltage reached 4.5 V at a current value of 6.0 A, constant voltage charging was carried out at a voltage of 4.5 V for 10 minutes.
(2) After carrying out constant current discharging until the voltage reached 2.0 V at a current value of 6.0 A, constant voltage discharging was carried out at a voltage of 2.0 V for 10 minutes.

[Aging Step]

After completion of the cycle aging step, the nonaqueous lithium power storage element precursor 1 was subjected to constant current charging at a current value of 10 A until the voltage reached 4.2 V in an environment at a temperature of 60°C, and then the voltage was adjusted to 4.2 V by carrying out constant current charging at 4.2 V for 30 minutes. Thereafter, the nonaqueous lithium power storage element precursor was stored in a thermostatic chamber at 60°C for 6 hours. Subsequently, the nonaqueous lithium power storage element precursor 1 was subjected to constant current discharging at a current value of 10 A until the voltage reached 2.0 V in an environment at a temperature of 60°C, and then the voltage was adjusted to 2.0 V by carrying out constant voltage discharging at 2.0 V for 30 minutes. Thereafter, the nonaqueous lithium power storage element precursor was stored in a thermostatic chamber at 60°C for 6 hours.

[Degassing Step]

After aging, the nonaqueous lithium power storage element precursor 1 was placed in a dry air environment at a temperature of 25°C and a dew point of -40°C, and part of the aluminum laminate packaging material was opened. Subsequently, the nonaqueous lithium power storage element precursor was placed in a pressure reduction chamber, and the step of reducing the pressure from atmospheric pressure to -80 kPa over 3 minutes using a KNF diaphragm pump (N816.3KT.45.18) and then restoring to atmospheric pressure over 3 minutes was repeated 3 times. Thereafter, the nonaqueous lithium power storage element precursor was placed in a vacuum sealer, and after reducing the pressure to -90 kPa, the aluminum laminate packaging material was sealed at 200°C for 10 seconds under pressure of 0.1 MPa. Through the above steps, the nonaqueous lithium power storage element 1 was completed.

<Evaluation of Nonaqueous Lithium Power Storage Element>

[Acquisition and Binarization of SEM Images]

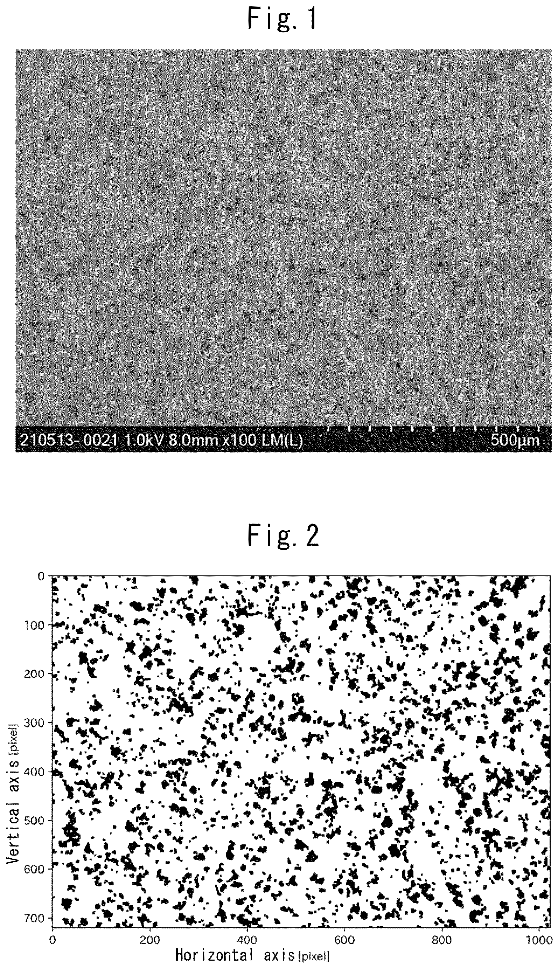

SEM images of nonaqueous lithium power storage element 1 were acquired and binarized according to the procedure mentioned in aforementioned "Acquisition Method and Binarization Method of SEM Images". The obtained SEM image and the binarized SEM image are shown in FIG. 1 and FIG. 2, respectively. It was confirmed that low brightness portions were finely distributed in the SEM images in Example 1. When the low brightness portion of the SEM image was enlarged, the presence of deposits containing compounds derived from metallic Li was confirmed.

[Calculation of Deposit Area]

The calculation was carried out using the procedure mentioned in aforementioned "Calculation of Maximum Area S and Mean Area T of Dark Field Regions", and found to be S = 2,408 pixel$^2$ and T = 277 pixel$^2$

[Measurement of Li Doping Amount]

The Li doping amount of the nonaqueous lithium power storage element was measured according to the procedure mentioned in aforementioned "Measurement of Li Doping Amount". As a result, it was confirmed that the Li doping amount of the nonaqueous lithium power storage element 1 was 93%.

[High-Temperature Cycle Test]

A high-temperature cycle test was carried out according to the procedure mentioned in aforementioned "High-Temperature Cycle Test".

[Measurement of Li Deactivation Rate]

The Li deactivation rate was measured according to the procedure mentioned in the measurement of Li deactivation rate. As a result, the Li deactivation rate of the nonaqueous lithium power storage element 1 was 0.446%/h$^{1/2}$

< <Example 2>>

A nonaqueous lithium power storage element 2 was fabricated in the same manner as in Example 1, except that the conditions for the alkali metal doping step were changed. In the alkali metal doping step of the nonaqueous lithium power storage element 2, constant current charging was carried out at a current value of 0.80 A in an environment of 45°C until the voltage reached 4.2 V, followed by constant current charging at a current value of 1.3 A until the voltage reached 4.5 V, and further continuous constant voltage charging for 2.5 hours. Subsequently, in the same manner as in Example 1, the deposit area, Li doping amount and Li deactivation rate were calculated. The calculation results are shown in Table 1.

<<Example 3>>

A nonaqueous lithium power storage element 3 was fabricated in the same manner as in Example 1, except that the conditions for the alkali metal doping step were changed. In the alkali metal doping step of the nonaqueous lithium power storage element 3, constant current charging was carried out at a current value of 0.20 A in an environment of 45°C until the voltage reached 4.2 V, followed by constant current charging at a current value of 1.3 A until the voltage reached 4.5 V, and further continuous constant voltage charging for 2.5 hours. Subsequently, in the same manner as in Example 1, the deposit area, Li doping amount and Li deactivation rate were calculated. The calculation results are shown in Table 1.

<<Example 4>>

A nonaqueous lithium power storage element 4 was fabricated in the same manner as in Example 1, except that the conditions for the alkali metal doping step were changed. In the alkali metal doping step of the nonaqueous lithium power storage element 4, constant current charging was carried out at a current value of 0.40 A in an environment of 45°C until the voltage reached 4.5 V, followed by continuous constant voltage charging for 2.5 hours. Subsequently, in the same manner as in Example 1, the deposit area, Li doping amount and Li deactivation rate were calculated. The calculation results are shown in Table 1.

<<Example 5>>

A nonaqueous lithium power storage element 5 was fabricated in the same manner as in Example 1, except that the conditions for the alkali metal doping step were changed. In the alkali metal doping step of the nonaqueous lithium power storage element 5, constant current charging was carried out at a current value of 0.20 A in an environment of 45°C until the voltage reached 4.5 V, followed by continuous constant voltage charging for 2.5 hours. Subsequently, in the same manner as in Example 1, the deposit area, Li doping amount and Li deactivation rate were calculated. The calculation results are shown in Table 1.

<<Comparative Example 1>>

A nonaqueous lithium power storage element 6 was fabricated in the same manner as in Example 1, except that the conditions for the alkali metal doping step were changed. In the alkali metal doping step of the nonaqueous lithium power storage element 6, constant current charging was carried out at a current value of 1.3 A in an environment of 45°C until the voltage reached 4.5 V, followed by continuous constant voltage charging for 2.5 hours.

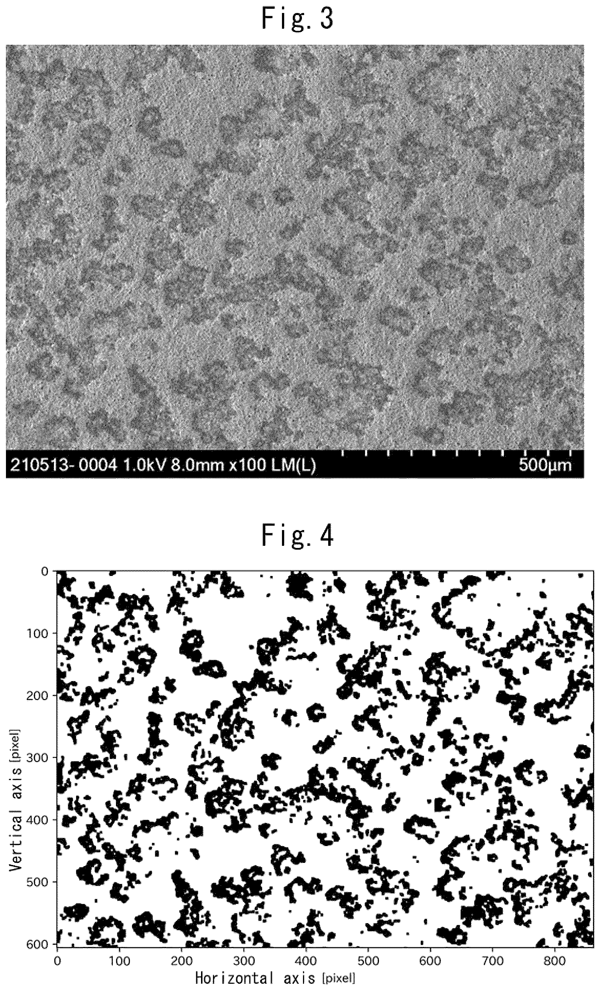

Subsequently, SEM images were acquired in the same manner as in Example 1. The obtained surface SEM images and the binarized SEM images are shown in FIG. 3 and FIG. 4, respectively. It was confirmed that low brightness portions were distributed like islands in the SEM image in Comparative Example 1. When the low brightness portion of the SEM image was enlarged, the presence of deposits derived from metallic Li was confirmed, as in Example 1. Therefore, in the Examples, fine deposits were distributed sparsely, whereas in Comparative Example 1, coarse deposits were distributed in islands. Subsequently, in the same manner as in Example 1, the deposit area, Li doping amount and Li deactivation rate were calculated. The calculation results are shown in Table 1.

<<Comparative Example 2>>

A nonaqueous lithium power storage element 7 was fabricated in the same manner as in Example 1, except that the conditions for the alkali metal doping step were changed. In the alkali metal doping step of the nonaqueous lithium power storage element 7, constant current charging was carried out at a current value of 1.3 A in an environment of 45°C until the voltage reached 4.2 V, followed by constant current charging at a current value of 0.4 A until the voltage reached 4.5 V and further continuous constant voltage charging for 2.5 hours. Subsequently, in the same manner as in Example 1, the deposit area, Li doping amount and Li deactivation rate were calculated. The calculation results are shown in Table 1.

Table 1.

| | Maximum area S [pixel^2] | Mean area T [pixel^2] | Li doping amount [%] | Li deactivation rate [%/√h] |
|---|---|---|---|---|
| Example 1 | 2,408 | 277 | 93 | 0.446 |
| Example 2 | 2,862 | 364 | 89 | 0.458 |
| Example 3 | 2,639 | 227 | 90 | 0.568 |
| Example 4 | 2,356 | 283 | 82 | 0.469 |
| Example 5 | 2,296 | 245 | 80 | 0.552 |
| Comparative Example 1 | 4,482 | 697 | 95 | 0.920 |
| Comparative Example 2 | 5,821 | 947 | 83 | 1.092 |

From the above, it was confirmed that the Li deactivation rate was suppressed by reducing the area of deposits formed on the negative electrode. Since the life of the nonaqueous lithium power storage element can be extended as the Li doping amount is larger, it is more preferable that the Li doping amount is 85% or more.

Industrial Applicability

Using the nonaqueous lithium power storage element of the present disclosure, for example, a plurality of nonaqueous lithium power storage elements can be connected in series or in parallel to produce a power storage module. The nonaqueous lithium power storage element and power storage module of the present disclosure can be suitably used in various power storage systems, for example, regeneration power assist systems in automobile hybrid drive systems that require high-load charge/discharge cycle characteristics; power load leveling systems in natural power generation such as solar power generation and wind energy generation, or in microgrids; uninterruptible power supply systems in factory production facilities, etc.; contactless power supply systems intended to level out voltage fluctuations such as microwave power transmission and electrolytic resonance and to store energy; and energy harvesting systems intended to utilize power generated by vibration power generation, etc.; electric vehicles, plug-in hybrid vehicles, electric motorcycles, in-wheel motor systems, and electric power steering systems as vehicle power sources; and rapid charging systems that charge with a large current to charge in a short period of time. The nonaqueous lithium power storage element of the present disclosure is preferable, for example, when applied as a lithium-ion capacitor or a lithium-ion secondary battery, since the effects of the present disclosure are maximized.

**Claims**

1. A nonaqueous lithium power storage element comprising a positive electrode having a positive electrode active material layer which contains a positive electrode active material and an alkali metal compound, a negative electrode, a separator, and a nonaqueous electrolytic solution containing lithium ions,

    wherein the negative electrode has a bright field region and a plurality of dark field regions corresponding to deposits formed on a surface of the negative electrode active material layer in an image obtained by binarizing a secondary electron image of the surface of the negative electrode active material layer based on brightness of each pixel, the image being taken at a magnification of 100 times using a scanning electron microscope without exposing to air, and
    wherein maximum value S [pixel$^2$] of an area occupied by each of the dark field regions when one pixel is 1.46 $\mu$m is 4,000 or less.

2. The nonaqueous lithium power storage element according to claim 1, wherein the positive electrode active material is activated carbon, the alkali metal compound is lithium carbonate, the nonaqueous electrolytic solution contains an electrolyte salt containing lithium ions, and a cyclic compound selected from a cyclic carbonate and a cyclic sulfate ester.

3. The nonaqueous lithium power storage element according to claim 1 or 2, wherein the maximum value S of the area of the dark field regions is 3,500 [pixel$^2$] or less.

4. The nonaqueous lithium power storage element according to claim 3, wherein the maximum value S of the area of the dark field region is 2,408 [pixel$^2$] or more and 3,000 [pixel$^2$] or less.

5. The nonaqueous lithium power storage element according to claim 4, wherein the nonaqueous electrolytic solution contains the cyclic sulfate ester, and the cyclic sulfate ester is ethylene sulfate.

6. The nonaqueous lithium power storage element according to claim 1, wherein the deposits corresponding to the dark field regions in the binarized image of the surface of the negative electrode active material contain a compound derived from metallic Li.

7. The nonaqueous lithium power storage element according to claim 1, wherein a doping amount of lithium ions in the negative electrode is 85% or more and 100% or less.

8. The nonaqueous lithium power storage element according to claim 1, wherein a mean value T [pixel$^2$] of the area occupied by each of the dark field regions when one pixel is 1.46 $\mu$m is 600 or less in the binarized image.

9. The nonaqueous lithium power storage element according to claim 8, wherein the mean value T is 400 or less.

10. A method for producing a nonaqueous lithium power storage element, the method comprising:

    a first doping step of charging the nonaqueous lithium power storage element at 0.05 C to 0.20 C until reaching 4.1 to 4.3 V, the nonaqueous lithium power storage element comprising a positive electrode precursor having a positive electrode active material layer which contains a positive electrode active material containing activated carbon, and lithium carbonate, a negative electrode, a separator, and a nonaqueous electrolytic solution, the nonaqueous electrolytic solution containing an electrolyte salt containing lithium ions, and a cyclic compound selected from a cyclic carbonate and a cyclic sulfate ester, and

a second doping step of subsequently charging the nonaqueous lithium power storage element at 0.25 C to 1.0 C until reaching 4.4 to 4.6 V.

## Fig. 1

210513- 0021 1.0kV 8.0mm x100 LM(L)          500μm

## Fig. 2

Fig. 3

210513- 0004 1.0kV 8.0mm x100 LM(L)                                    500μm

Fig. 4

## INTERNATIONAL SEARCH REPORT

| | International application No. |
|---|---|
| | **PCT/JP2023/032703** |

### A. CLASSIFICATION OF SUBJECT MATTER

*H01G 11/26*(2013.01)i; *H01G 11/06*(2013.01)i; *H01G 11/64*(2013.01)i
FI:  H01G11/26; H01G11/06; H01G11/64

According to International Patent Classification (IPC) or to both national classification and IPC

### B. FIELDS SEARCHED

Minimum documentation searched (classification system followed by classification symbols)

H01G11/26; H01G11/06; H01G11/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-13881 A (ASAHI KASEI CORP) 23 January 2020 (2020-01-23)<br>    paragraphs [0004]-[0006], [0184]-[0202] | 1-10 |
| Y | WO 2021/172175 A1 (PANASONIC INTELLECTUAL PROPERTY MANAGEMENT CO.,<br>LTD.) 02 September 2021 (2021-09-02)<br>    paragraphs [0005], [0010]-[0024], [0082] | 1-10 |
| Y | US 2022/0224141 A1 (NINGDE AMPEREX TECHNOLOGY LIMITED) 14 July 2022<br>(2022-07-14)<br>    paragraphs [0003], [0025], [0033], fig. 3, 4 | 1-10 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/032703**

| Patent document cited in search report | | | Publication date (day/month/year) | Patent family member(s) | | | Publication date (day/month/year) |
|---|---|---|---|---|---|---|---|
| JP | 2020-13881 | A | 23 January 2020 | (Family: none) | | | |
| WO | 2021/172175 | A1 | 02 September 2021 | EP | 4113665 | A1 | |
| | | | | paragraphs [0005], [0011]-[0026], [0091]-[0092] | | | |
| | | | | CN | 115152076 | A | |
| US | 2022/0224141 | A1 | 14 July 2022 | JP | 2022-546786 | A | |
| | | | | WO | 2022/027223 | A1 | |
| | | | | EP | 3979392 | A1 | |
| | | | | CN | 112640185 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022143057 A
- WO 2019244282 A
- WO 2021066174 A
- JP 2021158088 A

**Non-patent literature cited in the description**

- **E. P. BARRETT** ; **L. G. JOYNER** ; **P. HALENDA**. The Determination of Pore Volume and Area Distributions in Porous Substances. *J. Am. Chem. Soc.*, 1951, vol. 73, 373-380
- **B. C. LIPPENS** ; **J. H. DE BOER**. Studies on pore Systems in Catalysis V. The t Method. *J. Catalysis*, 1965, vol. 4, 319-323
- **R. S. MIKHAIL** ; **S. BRUNAUER** ; **E. E. BODOR**. Investigations of a Complete Pore Structure Analysis. *J. Colloid Interface Sci.*, 1968, vol. 26, 45-53